(19) Europäisches Patentamt
European Patent Office
Office européen des brevets

(11) **EP 4 701 238 A1**

(12) **EUROPEAN PATENT APPLICATION**
published in accordance with Art. 153(4) EPC

(43) Date of publication:
**25.02.2026 Bulletin 2026/09**

(21) Application number: **23933342.0**

(22) Date of filing: **17.04.2023**

(51) International Patent Classification (IPC):
***H04W 4/02*** *(2018.01)*

(52) Cooperative Patent Classification (CPC):
**H04W 4/02**

(86) International application number:
**PCT/CN2023/088789**

(87) International publication number:
**WO 2024/216462 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
 • **ZHANG, Jinyu
  Dongguan, Guangdong 523860 (CN)**
 • **CUI, Shengjiang
  Dongguan, Guangdong 523860 (CN)**
 • **XU, Weijie
  Dongguan, Guangdong 523860 (CN)**

(74) Representative: **Penza, Giancarlo
Bugnion S.p.A.
Viale Lancetti, 17
20158 Milano (IT)**

(54) **WIRELESS COMMUNICATION METHOD AND DEVICE**

(57)    A wireless communication method and a device. The method comprises: an ambient power (AMP) device sends a reference signal on a plurality of frequency domain resources, wherein the reference signal sent on the plurality of frequency domain resources is used for determining the location of the AMP device or a receiving end device of the reference signal; and/or the reference signal sent on the plurality of frequency domain resources is used for determining the distance between the AMP device and the receiving end device of the reference signal.

<u>200</u>

| AMP device | | Receiving end device |
|---|---|---|

S210, Send reference signals on
multiple frequency domain resources

**FIG. 7**

EP 4 701 238 A1

**Description**

TECHNICAL FIELD

Embodiments of the present disclosure relate to the field of communication, and in particular to a method for wireless communication and a device.

BACKGROUND

Positioning is an important application scenario of an ambient power (AMP) device. Limited by the power consumption and cost of the device, it is almost impossible to use large-bandwidth positioning reference signal in the cellular positioning system to measure the Reference Signal Time Difference (RSTD) or Rx-Tx time difference for positioning. Therefore, when AMP device is introduced into the communication system, how to realize the positioning of the device is an urgent problem to be solved.

SUMMARY

The present disclosure provides methods for wireless communication and devices, which can realize positioning or ranging of the device.

In the first aspect, a method for wireless communication is provided. The method includes the following operation. An ambient power (AMP) device sends reference signals on multiple frequency domain resources. The reference signals sent on the multiple frequency domain resources are used to determine a position of the AMP device or a position of a receiving end device of the reference signals, and/or the reference signals sent on the multiple frequency domain resources are used to determine a distance between the AMP device and the receiving end device of the reference signals.

In the second aspect, a method for wireless communication is provided. The method includes the following operation. A receiving end device receives reference signals sent by an AMP device on multiple frequency domain resources. The reference signals sent on the multiple frequency domain resources are used to determine a position of the AMP device or a position of the receiving end device, and/or the reference signals sent on the multiple frequency domain resources are used to determine a distance between the AMP device and the receiving end device.

In the third aspect, an AMP device is provided. The AMP device is configured to perform the method of the above first aspect or implementations thereof.

Specifically, the AMP device includes a functional module for performing the method of the above first aspect or implementations thereof.

In the fourth aspect, a receiving end device is provided. The receiving end device is configured to perform the method of the above second aspect or implementations thereof.

Specifically, the receiving end device includes a functional module for performing the method of the above second aspect or implementations thereof.

In the fifth aspect, an AMP device is provided. The AMP device includes a processor and a memory. The memory is configured to store a computer program, and the processor is configured to invoke and execute the computer program stored in the memory to perform the method of the above first aspect or implementations thereof.

In the sixth aspect, a receiving end device is provided. The receiving end device includes a processor and a memory. The memory is configured to store a computer program, and the processor is configured to invoke and execute the computer program stored in the memory to perform the method of the above second aspect or implementations thereof.

In the seventh aspect, a chip is provided. The chip is configured to implement the method of any one of the above first to second aspects or implementations thereof.

Specifically, the chip includes a processor. The processor is configured to invoke and execute a computer program from a memory to cause a device on which the apparatus is mounted to perform the method of any one of the above first to second aspects or implementations thereof.

In the eighth aspect, a computer readable storage medium is provided. The computer readable storage medium is configured to store a computer program that causes a computer to perform the method of any one of the above first to second aspects or implementations thereof.

In the ninth aspect, a computer program product is provided. The computer program product includes computer program instructions that cause a computer to perform the method of any one of the above first to second aspects or implementations thereof.

In the tenth aspect, a computer program is provided. When the computer program is executed on a computer, a computer performs the method of any of the above first to second aspects or implementations thereof.

According to the above technical solutions, the AMP device can send reference signals on multiple frequency domain resources, and the reference signals can be used for positioning or ranging, so that positioning of the AMP device or the receiving end device or ranging between the AMP device and the receiving end device can be realized.

BRIEF DESCRIPTION OF THE DRAWINGS

FIG. 1 is a schematic diagram of a communication system architecture according to an embodiment of the present disclosure.
FIG. 2 is a schematic diagram of a zero-power communication system according to an example of the present disclosure.
FIG. 3 is a schematic diagram of power harvesting according to an embodiment of the present disclosure.
FIG. 4 is a schematic diagram of back scattering communication according to an embodiment of the present disclosure.
FIG. 5 is a schematic diagram of a circuit of resistive load modulation according to an embodiment of the present disclosure.
FIG. 6 is a schematic diagram of a channel in the 2.4 GHz band.
FIG. 7 is a schematic diagram of a method for wireless communication according to an embodiment of the present disclosure.
FIG. 8 illustrates a schematic structure diagram of reference signals including frame headers or a packet header.
FIG. 9 illustrates a schematic structure diagram of frame headers or packet headers being sent before sending reference signals.
FIG. 10 is a schematic diagram of a frequency hopping pattern of reference signals according to an embodiment of the present disclosure.
FIG. 11 is a schematic diagram of sending the reference signals by the AMP device based on frequency domain resources preempted by a network device according to an embodiment of the present disclosure.
FIG. 12 is a another schematic diagram of sending the reference signals by the AMP device based on frequency domain resources preempted by a network device according to an embodiment of the present disclosure.
FIG. 13A is yet another schematic diagram of sending the reference signals by the AMP device based on frequency domain resources preempted by a network device according to an embodiment of the present disclosure.
FIG. 13B is yet another schematic diagram of sending the reference signals by the AMP device based on frequency domain resources preempted by a network device according to an embodiment of the present disclosure.
FIG. 14A is yet another schematic diagram of sending the reference signals by the AMP device based on frequency domain resources preempted by a network device according to an embodiment of the present disclosure.
FIG. 14B is yet another schematic diagram of sending the reference signals by the AMP device based on frequency domain resources preempted by a network device according to an embodiment of the present disclosure.
FIG. 15 to FIG. 20 are schematic diagrams of frequency domain resources for sending the reference signals by the AMP device in the frequency hopping manner according to embodiments of the present disclosure, respectively.
FIG. 21 is a schematic diagram of relative numbers of available frequency domain resources according to an embodiment of the present disclosure.
FIG. 22 is a statistical diagram of an error of time-of-arrival (TOA) estimation under a frequency hopping distance based on an embodiment of the present disclosure.
FIG. 23 is another statistical diagram of an error of TOA estimation under a frequency hopping distance based on an embodiment of the present disclosure.
FIG. 24 is a schematic block diagram of a terminal device according to an embodiment of the present disclosure.
FIG. 25 is a schematic block diagram of a network device according to an embodiment of the present disclosure.
FIG. 26 is a schematic block diagram of a communication device according to an embodiment of the present disclosure.
FIG. 27 is a schematic block diagram of a chip according to an embodiment of the present disclosure.
FIG. 28 is a schematic block diagram of a communication system according to an embodiment of the present disclosure.

DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure, but not all the embodiments. Regarding the embodiments in the present disclosure, all other embodiments obtained by those skilled in the art without creative work fall within the scope of protection of the present disclosure.

The technical solutions of the embodiments of the present disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of NR system, a LTE-based access to unlicensed spectrum (LTE-U) system, a NR-based access to unlicensed spectrum (NR-U), a Non-Terrestrial Networks (NTN) system, an Universal Mobile Telecommunication System (UMTS), a Wireless Local Area Networks (WLAN), a Wireless Fidelity (WiFi), 5th-Generation (5G) system, a cellular Internet of Things (IoT) system, a cellular passive IoT system or other communication systems, etc.

Generally speaking, the conventional communication system supports a limited number of connections and is easy to implement. However, with the development of communication technology, the mobile communication system will support not only conventional communication, but also, for example, Device to Device (D2D) communication, Machine to Machine (M2M) communication, Machine Type Communication (MTC), Vehicle to Vehicle (V2V) communication, or Vehicle-to-everything (V2X) communication, or the like. The embodiments of the present disclosure may also be applied to these communication systems.

Alternatively, the communication system in the embodiments of the present disclosure may be applied to a Carrier Aggregation (CA) scenario, a Dual Connectivity (DC) scenario, or a Standalone (SA) network layout scenario.

Alternatively, the communication system in the embodiments of the present disclosure may be applied to an unlicensed spectrum, and the unlicensed spectrum may also be regarded as a shared spectrum. The communication system in the embodiments of the present disclosure may also be applied to a licensed spectrum, and the licensed spectrum may also be regarded as a non-shared spectrum.

The present disclosure describes various embodiments in combination with an AMP device and a communication device. The AMP device may also be referred to as a zero-power device or an ambient power Internet of Things device. The communication device may be a network device, a terminal device or a relay device. Of course, the communication device may be another device, which is not limited in the embodiments of the present disclosure.

The terminal device may be a STATION (STA) in a WLAN, a cellular telephone, a cordless telephone, a Session Initiation Protocol (SIP) telephone, a Wireless Local Loop (WLL) station, a Personal Digital Assistant (PDA) device, a handheld device having wireless communication function, a computing device or other processing device connected to a wireless modem, an vehicle-mounted device, a wearable device, a terminal device in a next generation communication system such as an NR network, or a terminal device in a future evolved Public Land Mobile Network (PLMN) network, or the like.

In the embodiment of the present disclosure, the terminal device may be deployed on land, including indoor or outdoor, handheld, wearable, or vehicle-mounted. It may also be deployed on the water (such as ships, etc.). It may also be deployed in the air (for example, on aircraft, balloons and satellites, etc.).

In the embodiments of the present disclosure, the terminal device may be a Mobile Phone, a tablet (Pad), a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example and not limitation, in the embodiments of the present disclosure, the terminal device may also be a wearable device. The wearable device may also be referred to as a wearable smart device, which is the general name of wearable devices developed by applying wearable technology to intelligently design daily wear, such as glasses, gloves, watches, clothing and shoes. The wearable device is a portable device that is worn directly on the body or integrated into the clothes or accessories of the user. The wearable device is not only a kind of hardware device, but also realizes powerful functions through software support, data interaction and cloud interaction. Generalized wearable smart devices have features of full functions, large size and realizing complete or partial functions without relying on smart phones, such as a smart watch or smart glasses, and only focus on a certain type of application functions and need to be used in cooperation with other devices such as smart phones, for example, various smart bracelets, smart jewelries, etc. which may detect physical signs.

In the embodiments of the present disclosure, the network device may be a device for communicating with a mobile device, an Access Point (AP) in WLAN, a Base Transceiver Station (BTS) in GSM or CDMA, a base station (NodeB, NB) in WCDMA, an evolutional Node B (eNB or eNodeB) in LTE, a relay station, an AP, a vehicle-mounted device, a wearable device, a network device (gNB) in an NR network, a network device in a future evoluted PLMN network, or a network device in an NTN network, or the like.

As an example and not limitation, in the embodiments of the present disclosure, the network device may have mobile characteristics, for example, the network device may be a mobile device. Alternatively, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, or the like. Alternatively, the network device may be a base station provided on a land, a water area, or the like.

In the embodiments of the present disclosure, the network device may provide a service for a cell, and the terminal device communicates with the network device through a transmission resource (for example, frequency domain resource or spectrum resource) used by the cell. The cell may be a cell corresponding to the network device (for example, a base station), and the cell may belong to a macro base station or a base station corresponding to a Small cell. The Small cell here may include: a Metro cell, a Micro cell, a Pico cell, a Femto cell, etc. These small cells have the characteristics of small coverage and low transmission power, and are suitable for providing high-speed data transmission services.

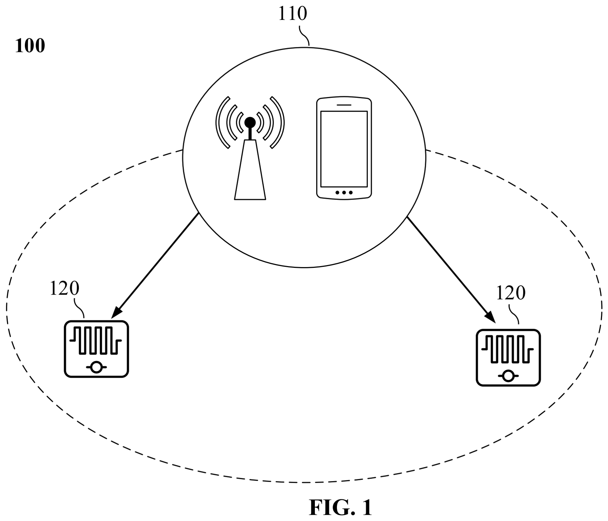

Exemplarily, a communication system 100 to which the embodiments of the present disclosure are applied is illustrated in FIG. 1. The communication system 100 may include a communication device 110, which may be a device in communication with an AMP device 120 (or referred to as a zero-power device). The communication device 110 may provide communication coverage for a particular geographic area and may communicate with an AMP device located within that coverage area.

FIG. 1 exemplarily illustrates one communication device and two AMP devices. Alternatively, the communication system 100 may include multiple communication devices and another number of AMP devices may be included within the coverage range of each communication device, which is not limited in the embodiments of the present disclosure.

In some embodiments, the communication system 100 may further include other network entities such as a network controller and a mobility management entity, which is not limited in the embodiments of the present disclosure.

It should be understood that a device having a communication function in the network/system in the embodiments of the present disclosure may be referred to as a communication device. Taking the communication system 100 illustrated in FIG. 1 as an example, the communication device may include a communication device 110 and an AMP device 120 having a communication function, and the communication device 110 and the AMP device 120 may be specific devices described above, which will not be described repeatedly here. The communication device may further include other devices in the communication system 100, such as other network entities such as a network controller and a mobility management entity, which are not limited in the embodiments of the present disclosure.

It should be understood that the terms "system" and "network" are often used interchangeably herein. Herein, the term "and/or" is only used for describing an association relationship of association objects, and means that there may be three relationships, for example, A and/or B, which may mean that A exists alone, A and B exist simultaneously, and B exists alone. In addition, the character "/" in the present disclosure generally indicates that there is an "or" relationship between the association objects.

It should be understood that the "indication" mentioned in the embodiments of the present disclosure may be a direct indication, an indirect indication, or represent an association relationship. For example, A indicates B, which may mean that A indicates B directly, for example, B may be acquired through A. It may also mean that A indicates B indirectly, for example, A indicates C, and B may be acquired through C. It may also mean that there is an association relationship between A and B.

In the description of the embodiments of the present disclosure, the term "correspondence" may indicate that there is a direct correspondence or indirect correspondence relationship between the two objects, may indicate that there is an association relationship between the two objects, or may indicate a relationship between indicating and being instructed, configuring and being configured, or the like.

In the embodiments of the present disclosure, the "predefined" may be realized by storing a corresponding code, a table, or other means that may be used to indicate related information in advance in a device (including, for example, a terminal device and a network device), and the specific implementation method is not limited in the present disclosure. For example, "predefined" may refer to being defined in the protocol.

In the embodiments of the present disclosure, the "protocol" may refer to a standard protocol in the field of communication, and may include, for example, an LTE protocol, an NR protocol, a Wi-Fi protocol, and related protocols applied to future communication systems, which is not limited in the present disclosure.

In order to facilitate understanding of the technical solutions of the embodiments of the present disclosure, related techniques of the present disclosure will be described.

I. Zero-power communication

The key technologies of zero-power communication include power harvesting, back scattering communication and low power technology.

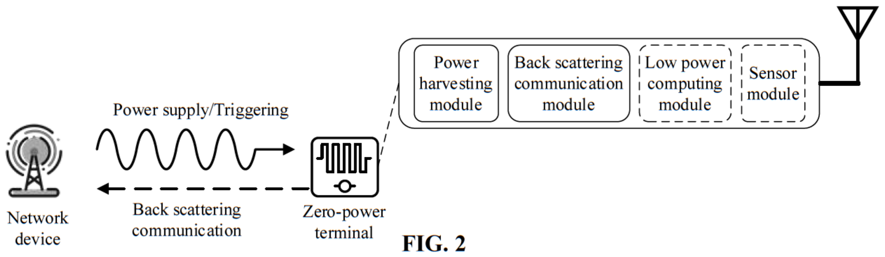

As illustrated in FIG. 2, a typical zero-power communication system (such as a Radio Frequency Identification (RFID) system) includes a network device (such as a reader/writer in the RFID system) and a zero-power device (such as an electronic tag). The network device is used for sending a wireless power supply signal and a downlink communication signal to the zero-power device and for receiving a back scattering signal from the zero-power device. A basic zero-power device includes a power harvesting module, a back scattering communication module and a low-power computing module. In addition, the zero-power device may also have a memory or sensor for storing some basic information (such as item identification, etc.) or sensing data such as ambient temperature and ambient humidity.

For example, the power harvesting module may harvest power carried by radio waves in space (as illustrated in FIG. 2, radio waves emitted by the network device) for driving low-power computing module of the zero-power device and implementing back scattering communication. After obtaining power, the zero-power device may receive a control command from the network device and send data to the network device in a back scattering manner based on the control signaling. The sent data may be the data stored by the zero-power device itself (such as identifier or pre-written information, such as the production date, brand, manufacturer, etc. of the product). The zero-power device may load with various sensors, so as to report the data collected by various sensors based on the zero-power mechanism.

Hereinafter, key technologies in the zero-power communication will be described.

1. RF Power Harvesting

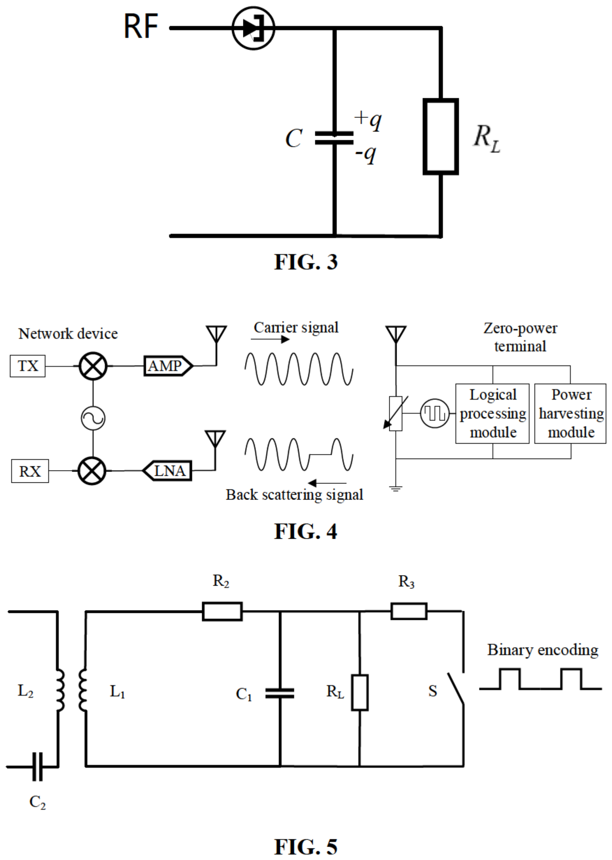

As illustrated in FIG. 3, the radio frequency power harvesting module harvests space electromagnetic wave power based on the principle of electromagnetic induction, and then obtains the power required to drive zero-power device, such as driving low-power demodulation and modulation modules, sensors and memory reading, etc. Therefore, the zero-power device does not require traditional batteries.

2. Back Scattering Communication

As illustrated in FIG. 4, the zero-power device receives a carrier signal sent by the network device, modulates the carrier signal, loads information to be sent, and radiates the modulated signal from the antenna. This information transmission process is called back scattering communication. Back scattering and load modulation functions are inseparable. The modulation process is completed by adjusting and controlling the circuit parameters of the oscillation loop of the zero-power device according to the beat of the data stream to cause the parameters such as the impedance of the zero-power device to be changed accordingly. The load modulation technology mainly includes resistive load modulation and capacitive load modulation. In resistive load modulation, a resistor is connected in parallel to the load, which is turned on or off based on the control of the binary data stream, as illustrated in FIG. 5. The on-off of the resistor will cause the change of the circuit voltage, so Amplitude Shift Keying (ASK) is realized, that is, the modulation and transmission of the signal are realized by adjusting the amplitude of the back scattering signal of the zero-power device. Similarly, in capacitive load modulation, the resonant frequency of the circuit may be changed by turning on and off the capacitor, so Frequency Shift Keying (FSK) is realized, that is, the modulation and transmission of the signal are realized by adjusting the working frequency of the back scattering signal of the zero-power device.

It may be seen that the zero-power device modulates the information of the incoming signal by means of load modulation, thereby realizing the back scattering communication process. Therefore, the zero-power device has following significant advantages:

(1) it does not actively transmit signals, so it does not need complex radio frequency links, such as Power Amplifier (PA), radio frequency filters, etc.;
(2) it does not need to actively generate a high-frequency signal, so there is no need for a high-frequency crystal oscillator; and
(3) by means of back scattering communication, signal transmission of the terminal does not need to consume the power of the terminal.

3. Encoding technology

The data transmitted by the zero-power device may use different forms of codes to represent binary "1" and "0". A Radio Frequency Identification system typically use one of the following encoding methods: Non Return Zero (NRZ) encoding, Manchester encoding, Unipolar RZ encoding, Differential Binary Phase (DBP) encoding, differential encoding, Pulse Interval Encoding (PIE), Bi-phase Space encoding (FM0), Miller encoding, and differential encoding. Simply put, different encoding techniques use different pulse signals to represent 0 and 1.

In some scenarios, on the basis of power sources and usage modes of zero-power devices, the zero-power device may be classified into the following types.

1. Passive zero-power devices

Zero-power devices (such as electronic tags in RFID systems) do not require built-in batteries. When a zero-power device is approaching a network device (for example, a reader/writer of an RFID system), the zero-power device is located within a near field range formed by antenna radiation of the network device. Therefore, an antenna of the zero-power device generates an induced current through electromagnetic induction, and the induced current drives a low-power chip circuit of the zero-power device, enabling demodulation of a forward link signal, modulation of a backward link (or referred to as a reflection link) signal, and other operations. For a backscatter link, the zero-power device performs signal transmission by using a backscatter implementation approach.

It can be seen that passive zero-power devices do not need a built-in battery to drive either the forward link or the backward link, and are zero-power devices in the truest sense.

Passive zero-power devices do not require a battery, and both RF and baseband circuits thereof are very simple. For example, devices such as low noise amplifiers (LNAs), power amplifiers (PAs), crystal oscillators, and analog-to-digital converters (ADC) are not required. Therefore, such devices have many advantages such as small size, light weight, extremely low price, and long service life.

Passive zero-power terminals may also support other power harvesting manners, and by harvesting energy (such as light energy, thermal energy, kinetic energy, mechanical energy, etc.) from the environment, the zero-power terminals obtain power to drive circuitry, thereby supporting the terminal devices to perform communication.

### 2. Semi-passive zero-power devices

Semi-passive zero-power devices do not have conventional batteries installed therein, but may use an RF power harvesting module to harvest radio wave energy or use a power harvesting module to harvest energy (such as solar energy, thermal energy, mechanical vibration energy, etc.) from the environment, and store the harvested energy in an energy storage unit (such as a capacitor). After obtaining the energy, the energy storage unit may drive a low-power chip circuit of the zero-power device, enabling demodulation of the forward link signal, modulation of the backward link signal and other operations. For a backscatter link, the zero-power device performs signal transmission by using a backscatter implementation approach. Alternatively, the zero-power device may use a low-power transmitter to perform active transmitting communication on the basis of the harvested energy.

It can be seen that semi-passive zero-power devices do not need a built-in battery to drive either the forward link or the backward link. Although the energy stored in the capacitor is used in operation, the energy is derived from the radio energy harvested by the power harvesting module. Therefore, semi-passive zero-power devices are also zero-power devices in the truest sense.

Semi-passive zero-power devices inherit many advantages of passive zero-power devices, and hence have many advantages such as small size, light weight, extremely low price, and long service life.

### 3. Active zero-power devices

The zero-power device used in some scenarios may also be an active zero-power device, and such a device may have a built-in battery. The battery is used to drive the low-power chip circuitry of the zero-power device, enabling demodulation of the forward link signal, modulation of the backward link signal and other operations. However, for a backscatter link, the zero-power device performs signal transmission by using a backscatter implementation approach. Therefore, the zero power aspect of this type of device mainly lies in that signal transmission over the backward link does not require the power of the terminal itself but relies on back scattering.

Active zero-power terminals have a built-in battery to supply power to the RFID chip, so as to increase the reading/writing distance of the active zero-power terminals and improve communication reliability. Therefore, such terminals are applied to some scenarios with relatively high requirements on the communication distance, the reading latency, etc.

In some scenarios, zero-power devices may be classified as follows on the basis of transmitter types.

### 1) Zero-power device based on back scattering

These zero-power devices transmit uplink data using the foregoing backscatter techniques. Such zero-power devices do not have an active transmitter capable of active transmission, but only have a back scatter transmitter. Therefore, when these zero-power devices transmit data, a network device is required to provide a carrier, and the zero-power devices perform back scattering on the basis of the carrier, thereby achieving data transmission.

### 2) Zero-power devices based on active transmitters

These zero-power devices use active transmitters with active transmission capabilities to perform uplink data transmission. Therefore, when transmitting data, such zero-power devices can transmit data by using their own active transmitters, without requiring a network device to provide a carrier. The active transmitters suitable for the zero-power devices may include, for example, ultra-low-power ASK transmitters, ultra-low-power FSK transmitters, or the like, and when a signal of 100 uw is transmitted, the overall power consumption may be reduced to 400 uw to 600 uw.

3. Zero-power devices equipped with both backscatter transmitters and active transmitters

These zero-power devices may support both backscatter transmitters and active transmitters. Such zero-power devices may determine, according to different conditions (for example, battery status and available ambient energy) or on the basis of scheduling by a network device, which signal transmitting method to use, that is, whether to use an active transmitter or a backscatter transmitter to perform signal transmission.

With the rapid development of the Internet of Things, existing Internet of Things communication technologies can no longer meet the Internet of Things communication requirements in many scenarios, such as the following.

1. Harsh communication environments

Some Internet of Things scenarios may face extreme conditions, such as high temperature, extremely low temperature, high humidity, high pressure, high radiation, or high-speed motion; for example, ultra-high voltage substations, rail monitoring for high-speed trains, environmental monitoring in frigid regions, industrial production lines, etc. In these scenarios, existing Internet of Things terminals may not be operable due to the working environment limitations of the conventional power supply. In addition, extreme working environments are also disadvantageous for IoT maintenance, such as battery replacement.

2. Requirement for extremely small-size terminal forms

In some Internet of Things communication scenarios, such as food traceability, commodity circulation, and smart wearable, terminals is required to be extremely compact to facilitate use in these scenarios. For example, Internet of Things terminals for product management in the supply chain generally take the form of electronic tags, which are embedded into product packaging in a very compact form. For another example, lightweight wearable devices can improve user experience while meeting user needs.

3. Ultra-low-cost Internet of Things communication requirements

Many Internet of Things communication scenarios demand extremely low-cost IoT terminals to improve competitiveness over other alternative technologies. For example, in logistics or warehousing scenarios, to facilitate management of a large quantity of circulating items, an IoT terminal may be attached to each item, so as to enable accurate management in the entire logistics process and the entire cycle through communication between the terminal and a logistics network. These scenarios require IoT terminals to be cost-competitive enough.

Therefore, in order to address these unmet communication demands in IoT, there is a need to develop ultra-low-cost, extremely small-sized, battery-free/maintenance-free IoT technologies in cellular networks, and zero-power IoT precisely meets this requirement.

Zero-power Internet of Things (IoT) may also be referred to as ambient power enabled IoT (ambient IoT or AMP IoT for short). Zero-power devices may also be referred to as ambient IoT devices or AMP IoT devices. An ambient IoT device may refer to an IoT device using various types of ambient energy, such as RF energy, light energy, solar energy, thermal energy, or mechanical energy. Such a device may have no energy storage capability, or may have very limited energy storage capability, such as using a capacitor with tens of uF of capacitance.

Ambient IoT may be used in at least the following four scenarios:

1. object identification, such as logistics, production-line product management, and supply chain management;
2. environmental monitoring, such as temperature, humidity and harmful gas monitoring in work environments and natural environments;
3. positioning, such as indoor positioning, smart item tracking, and production-line item localization; and
4. intelligent control, such as intelligent control of various appliances in smart homes (turning on/off an air conditioner, and adjusting temperature), and intelligent control of various facilities in agricultural greenhouse systems (automatic irrigation and fertilization).

II. Cellular passive Internet of Things

With the increase of applications in the 5G industry, the types and application scenarios of connected objects are increasing, placing higher demands on both the cost and power consumption of communication terminals. The application of battery-free and low-cost passive Internet of Things devices has become a key technology for cellular IoT, which enriches the types and number of connected terminals in 5G networks and truly realizes the Internet of Everything. Passive Internet of Things devices can be based on zero-power communication technology, such RFID technology, and are extended on this basis to be applicable to cellular IoT.

In order to facilitate understanding of the embodiments of the present disclosure, a power supply signal, a scheduling signal, and a carrier signal related to the zero-power communication will be described.

1. Power supply signal

The power supply signal is the power source for the zero-power device performing power harvesting.

The carrier of the power supply signal may be a base station, a smartphone, a smart gateway, a charging station, a micro base station, or the like.

The frequency band of the radio wave used for power supply may be a low frequency, an intermediate frequency, a high frequency, or the like.

The waveform of the radio wave used for power supply may be a sine wave, a square wave, a triangular wave, a pulse wave, a rectangular wave, or the like.

In addition, the power supply signal may be a continuous wave or a discontinuous wave (i.e., a certain time interruption is allowed).

Alternatively, the power supply signal may be an existing signal in the 3GPP standard, for example, a Sounding Reference Signal (SRS), a Physical Uplink Shared Channel (PUSCH), a Physical Random Access Channel (PRACH), a Physical Uplink Control Channel (PUCCH), a Physical Downlink Control Channel (PDCCH), a Physical Downlink Shared Channel (PDSCH), a Physical Broadcast Channel (PBCH), a WIFI signal, a Bluetooth signal or the like.

Alternatively, the power supply signal may also be implemented by adding a new signal, for example, adding a new signal dedicated to power supply.

2. Trigger signal or scheduling signal

The trigger signal is used to trigger or schedule the zero-power device for data transmission.

The carrier of the trigger signal may be a base station, a smartphone, a smart gateway, or the like.

The frequency band of the radio waves used for triggering or scheduling may be a low frequency, an intermediate frequency, a high frequency, or the like.

The waveform of the radio wave used for triggering or scheduling may be a sine wave, a square wave, a triangular wave, a pulse wave, a rectangular wave, or the like.

In addition, the trigger signal may be a continuous wave or a discontinuous wave (i.e., a certain time interruption is allowed).

Alternatively, the trigger signal may be an existing signal in the 3GPP standard, for example, an SRS, a PUSCH, a PRACH, a PUCCH, a PDCCH, a PDSCH, a PBCH, a WIFI signal, a Bluetooth signal, or the like.

Alternatively, the trigger signal may also be implemented by adding a new signal, for example, adding a new signal dedicated to triggering or scheduling.

3. Carrier signal

The carrier signal is used for the zero-power device to generate the back scattering signal, for example, the zero-power device may modulate the received carrier signal according to the information needed to be sent to form the back scattering signal.

The carrier of the carrier signal may be a base station, a smartphone, a smart gateway, or the like.

The frequency band of the radio wave used for the carrier signal may be a low frequency, an intermediate frequency, a high frequency, or the like.

The waveform of the radio wave used for the carrier signal may be a sine wave, a square wave, a triangular wave, a pulse wave, a rectangular wave, or the like.

In addition, the carrier signal may be a continuous wave or a discontinuous wave (i.e., a certain time interruption is allowed).

Alternatively, the carrier signal may be an existing signal in the 3GPP standard, for example, an SRS, a PUSCH, a PRACH, a PUCCH, a PDCCH, a PDSCH, a PBCH, a WIFI signal, a Bluetooth signal, or the like.

Alternatively, the carrier signal may also be implemented by adding a new signal, for example, adding a carrier signal dedicated for generating a back scattering signal.

It should be noted that in the embodiments of the present disclosure, the power supply signal, the scheduling signal, and the carrier signal may be the same signal, or may be different signals, for example, the power supply signal may be used as a carrier signal, the scheduling signal may be used as a carrier signal, and the like.

In order to facilitate understanding of the embodiments of the present disclosure, the channel design in the WiFi system will be described.

Wi-Fi is WLAN based on the IEEE 802.11 standard. There are many standard protocols for WLAN, such as IEEE 802.11 protocol family, HiperLAN protocol family, etc.

The WLAN channel list is the wireless channels that should be used by IEEE 802.11 (or WiFi) wireless networks as stipulated by law.

The 802.11 Working Group divides two separate frequency bands, 2.4 GHz and 4.9/5.8 GHz. Each frequency band is divided into several channels, and each country formulates its own policies to determine how to use these frequency bands, as shown in Table 1.

Table 1

| Nation | 2.4 GHz | 5GHz (4.9/5.8) |
|---|---|---|
| China | 2.412 -2.472 GHz: 13 channels | 5.725 - 5.825 GHz: 4 channels |
| Americas (FCC) | 2.412 -2.462 GHz: 11 channels | 5.15-5.35 GHz, 5.725-5.825 GHz: 12 channels |
| North America (except FCC) | 2.412 - 2.462 GHz: 11 channels | 5.15 - 5.35 GHz, 5.725 - 5.825 GHz: 12 channels |
| Europe (ETSI) | 2.412 - 2.472 GHz: 13 channels | 5.15 - 5.35 GHz: 8 channels<br>5470 - 5725 MHz: 11 channels |
| Israel | 2.432 - 2.472 GHz: 9 channels | 5.15 - 5.35 GHz: 8 channels |
| Japan | 2.412 - 2.472 GHz: 13 channels (OFDMs) | 2.412 - 2.484 GHz: 14 channels (CCK)<br>5.15 - 5.25 GHz: 4 channels |
| Japan 2 | 2.412-2.472 GHz: 13 channels (OFDM)<br>2.412-2.484 GHz: 14 channels | CCK5.15 - 5.35 GHz: 8 channels |
| South Korea | 2.412 -2.472 GHz: 13 channels | 5.15-5.35 GHz, 5.46-5.72 GHz, 5.725-5.825 GHz: 19 channels |
| Singapore | 2.412 - 2.472 GHz: 13 channels | 5.15 - 5.35 GHz, 5.725 - 5.825 GHz: 12 channels |
| Taiwan, China | 2.412 - 2.462 GHz: 11 channels | 5.25 -5.35 GHz, 5.725 - 5.825 GHz: 7 channels |

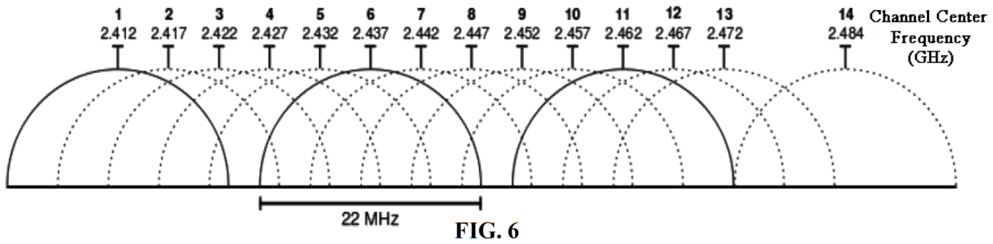

FIG. 6 is a schematic diagram of a channel in the 2.4 GHz band. The valid bandwidth of the channel is 20MHz, and the actual bandwidth is 22MHz, of which 2MHz is the isolation frequency band. The center frequency points of adjacent channels are 5 MHz apart, and there are frequencies overlapping among adjacent channels. There are three groups of channels that do not interfere with each other (channel 1, channel 6, channel 11 or channel 2, channel 7, channel 12 or channel 3, channel 8, channel 13).

Table 2 shows the specific information of 13 channels.

Table 2

| Channel | Bandwidth (MHz) | Center frequency (MHz) |
|---|---|---|
| 1 | 20 | 2412 (2401-2423) |
| 2 | 20 | 2417 |
| 3 | 20 | 2422 |
| 4 | 20 | 2427 |
| 5 | 20 | 2432 |
| 6 | 20 | 2437 |
| 7 | 20 | 2442 |

(continued)

| Channel | Bandwidth (MHz) | Center frequency (MHz) |
|---|---|---|
| 8 | 20 | 2447 |
| 9 | 20 | 2453 |
| 10 | 20 | 2457 |
| 11 | 20 | 2463 |
| 12 | 20 | 2467 |
| 13 | 20 | 2472 |
| 14 (generally not used) | 20 | 2484 |

In some scenarios, the delay or distance may be measured by using a single-frequency wireless signal. It is assumed that the UE that sends the signal is separated by d meters from the base station that receives the signal (corresponding propagation time t = d/c). According to the propagation principle of electromagnetic waves, the phase change of the signal of frequency f after propagating by d meters is $2 * pi * f * t = 2 * pi * d/\lambda$ ($c = \lambda f$, $\lambda$ is the wavelength of the carrier of frequency f). It is assumed that the carrier frequency f of the wireless signal is 1 GHz, the phase change period $2 * pi$ corresponds to 1 ns (0.3 m). Only relying on single-frequency signal to measure the delay/distance will have the problem of integer ambiguity.

The principle of measuring delay/distance by dual-frequency phase difference is similar to the above, and the delay/distance is measured by measuring the difference of phase changes of two frequency points (f1, f2). This is equivalent to a phase change of $2 * pi * df * t$ corresponding to a signal of frequency df = f1-f2. When the two frequency points are close enough, for example, the phase difference df = fl-f2 = 500kHz, then the phase change period $2 * pi$ corresponds to 2us (600m), which means that there is no integer ambiguity problem in the 600m range.

Positioning is an important application scenario of the zero-power devices. Limited by the power consumption and cost of the device, it is almost impossible to use large-bandwidth positioning reference signal in the cellular positioning system to measure the Reference Signal Time Difference (RSTD) or Rx-Tx time difference for positioning. Therefore, when the zero-power devices are introduced into the communication system, how to realize the positioning of devices is an urgent problem to be solved.

In order to facilitate understanding of the technical solutions of the embodiments of the present disclosure, the technical solutions of the present disclosure will be described in detail below with reference to specific examples. The above related technologies may be arbitrarily combined with the technical solutions of the embodiments of the present disclosure as optional solutions, and all of them belong to the scope of protection of the embodiments of the present disclosure. Embodiments of the present disclosure include at least a part of the following contents.

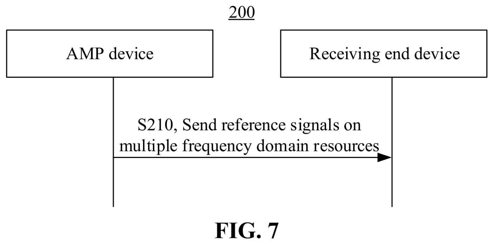

FIG. 7 is a schematic diagram of a method 200 for wireless communication according to an embodiment of the present disclosure. As illustrated in FIG. 7, the method 200 includes at least a part of the following contents.

In operation S210, an AMP device sends reference signals on multiple frequency domain resources.

Correspondingly, a receiving end device receives the reference signals sent by the AMP device on the multiple frequency domain resources, and may measure the reference signals on the multiple frequency domain resources. For example, phase features of the reference signals on the multiple frequency domain resources are measured. For example, a phase of the reference signal on each frequency domain resource is measured, or the phase difference between the reference signals on different frequency domain resources is measured.

In some embodiments, the reference signals sent on the multiple frequency domain resources are used for positioning and/or ranging.

For example, the reference signals sent on the multiple frequency domain resources are used to determine a position of the AMP device or the receiving end device, or the reference signals sent on the multiple frequency domain resources are used to determine a distance between the AMP device and the receiving end device.

In the embodiments of the present disclosure, the reference signal may be referred to as a Positioning reference signal (PRS) or a phase positioning reference signal.

In some scenarios, the position of the receiving end device is known (that is, the receiving end device is an anchor point device), and the receiving end device may measure the reference signals sent by the AMP device on multiple frequency domain resources to determine the position of the AMP device.

For example, the receiving end device may determine the position of the AMP device based on phase features of reference signals sent on the multiple frequency domain resources. The phase feature may be a phase change/phase difference, or the phase feature may be a phase difference between multiple frequencies (typically positioning based on a dual-frequency phase difference).

In other scenarios, the position of the AMP device is known (that is, the AMP device is an anchor point device), and the receiving end device may measure the reference signals sent by the AMP device on multiple frequency domain resources to determine the position of the receiving end device.

For example, the receiving end device may determine the position of the receiving end device based on phase features of reference signals sent on the multiple frequency domain resources. The phase feature may be a phase change/phase difference, or the phase feature may be a phase difference between multiple frequencies (typically positioning based on a dual-frequency phase difference).

In still other scenarios, the receiving end device may measure reference signals sent by the AMP device on multiple frequency domain resources to determine a relative distance between the AMP device and the receiving end device.

For example, the receiving end device may determine a distance between the AMP device and the receiving end device based on phase features of reference signals sent on the multiple frequency domain resources. The phase feature may be a phase change/phase difference, or the phase feature may be a phase difference between multiple frequencies (typically ranging based on a dual-frequency phase difference).

In some embodiments, the receiving end device may be a communication device 110 in the communication system illustrated in FIG. 1, such as a conventional terminal or a network device.

In the embodiments of the present disclosure, the AMP device may be applied to a WiFi and/or a cellular network.

In the embodiments of the present disclosure, the AMP device may be referred to as an Ambient IoT device, an AMP IoT device, a zero-power device, or a zero-power terminal.

It should be noted that, in the embodiments of the present disclosure, the naming of the AMP device does not limit the source of its power, and for example, the power required for operation may come from radio frequency power, light power, solar power, thermal power, mechanical power, and the like.

In some embodiments, the receiving end device may be a base station in a cellular communication system, such as a gNB in an NR system, or may be an AP in a WIFI system, and the like, which is not limited in the present disclosure.

In some embodiments, the receiving end device may be an existing terminal in a communication system, such as a UE in an NR system, or a STA in a WIFI system, and the like, which is not limited in the present disclosure.

It should be understood that the embodiments of the present disclosure do not limit a specific method for positioning or ranging based on reference signals sent on multiple frequency domain resources. For example, the receiving end device may measure phases or phase difference(s) of reference signals sent on multiple frequency domain resources, further determine a propagation delay or a distance between the receiving end device and the AMP device based on the phases or the phase difference(s), and further obtain distance information between the AMP device and the receiving end device, or position information of the AMP device, or position information of the receiving end device.

In some embodiments, the AMP device only supports a communication manner of back scattering.

In this case, the AMP device sends the reference signals on multiple frequency domain resources through back scattering.

In some embodiments, the AMP device supports a communication manner of back scattering and a communication manner of active transmission.

In this case, the AMP device may send the reference signals on multiple frequency domain resources through back scattering manner or active transmission.

In some embodiments, the frequency domain resource is one of: a channel, a carrier, a band width part (BWP), a physical resource block (PRB) group, and a subcarrier group.

That is, the multiple frequency domain resources may be multiple channels, multiple carriers, multiple BWPs, multiple PRB groups, or multiple subcarrier groups.

Specifically, in the operating frequency band of the AMP device, multiple channels or carriers may be divided, and different channels may overlap or not overlap. The AMP device may send reference signals on multiple frequency domain resources in the operating frequency band, and the receiving end device determines the propagation delay/distance between the AMP device and the receiving end device by measuring the phases and/or phase difference(s) of the reference signals, thereby obtaining the distance/position information of the AMP device. Further, the frequency domain resource may be a channel, or a BWP, or an aggregation of multiple BWPs, or an aggregation of multiple tones, or an aggregation of multiple PRBs.

For example, when the RFID frequency band of 920-925 MHz is used for communication, and the bandwidth of each channel is 250kHz, the system bandwidth of 5MHz (920-925 MHz) may be divided into 20 channels with a bandwidth of 250kHz. In this case, the frequency domain resource may be a channel, that is, each channel is used as a frequency domain resource, and the AMP device may send reference signals on different channels.

In some embodiments, one PRB group includes one or more PRBs, for example, one PRB group is an aggregation/set/binding of multiple PRBs.

In some embodiments, a subcarrier group includes one or more subcarriers, for example, a subcarrier group is an aggregation/set/binding of multiple subcarriers.

In some embodiments, the reference signal includes a frame header or a packet header. The frame header or packet header carries time length information (such as a transmission opportunity (TXOP)) of frequency domain resource occupied by the reference signal.

In other embodiments, the frame header or packet header is sent before sending the reference signal.

It should be understood that the case that the reference signal sent by the AMP device includes frame headers or packet header may be understood that the frame header or packet header is considered as a part of the reference signal. In the case that the AMP device sends the frame header or packet header before sending the reference signal, the frame header or packet header and the reference signal are regarded as two independent parts, and the AMP device needs to send the frame header or packet header before sending the reference signal, so that the frame header or packet header may share a structure with the header of other signal/channel.

It should be noted that in WiFi communication, the transmission of a single frame is guaranteed through physical carrier monitoring (non-TXOP). The TXOP introduced in 802.11e actually means "obtaining a duration-based transmission after contending once", that is, after a node is successful in contending, it obtains a period of usage time of the channel, during which it may transmit multiple data frames. This transmission method is also often described by the word "Burst". The transmission time of TXOP is guaranteed through virtual carrier monitoring.

In some embodiments, the frame header further carries at least one of: information for identifying the AMP device, information for identifying the receiving end device of the reference signal, information for synchronizing the AMP device and the receiving end device of the reference signal, or configuration information of the reference signal.

In some embodiments, the information for identifying the AMP device may be ID information of a sending end device (i.e., the AMP device).

In some embodiments, the information for identifying the receiving end device may be ID information of the receiving end device.

In some embodiments, the information for synchronizing the AMP device and the receiving end device of the reference signal includes a synchronization sequence or a pilot sequence.

In some embodiments, the configuration information of the reference signal includes, but is not limited to, at least one of: a starting position at which the reference signal is actually sent, a transmission duration of the reference signal, a subcarrier actually occupied by the reference signal, or a modulation symbol of a reference signal on each occupied subcarrier.

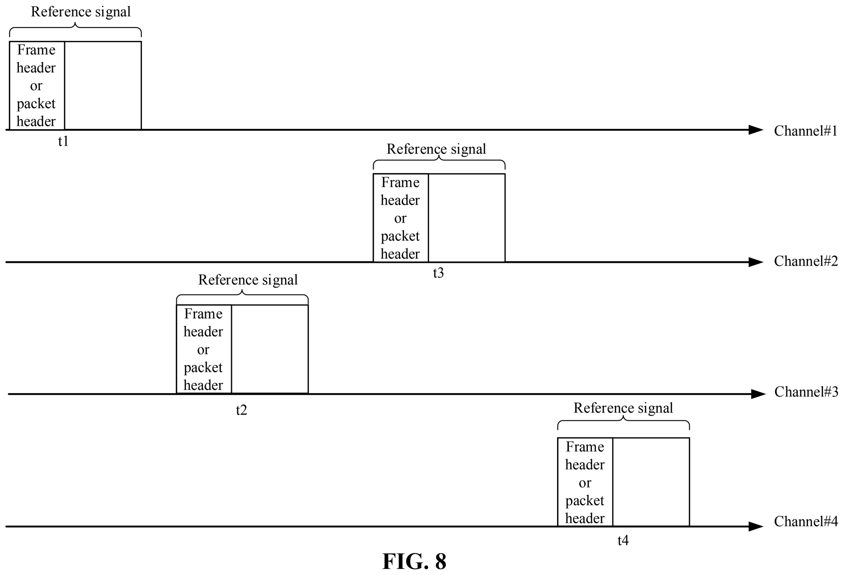

FIG. 8 illustrates a schematic structure diagram of reference signals including frame headers or packet headers. In the example of FIG. 8, the multiple frequency domain resources include channel # 1, channel # 3, channel # 2, and channel # 4, and the reference signal sent on each channel includes a frame header or a packet header, and the frame header or packet header carries time length information of the corresponding frequency domain resource occupied by the reference signal, and may further carry other information of the reference signal, such as information of the sending end device, information of the receiving end device, synchronization information, configuration information of the reference signal, or the like.

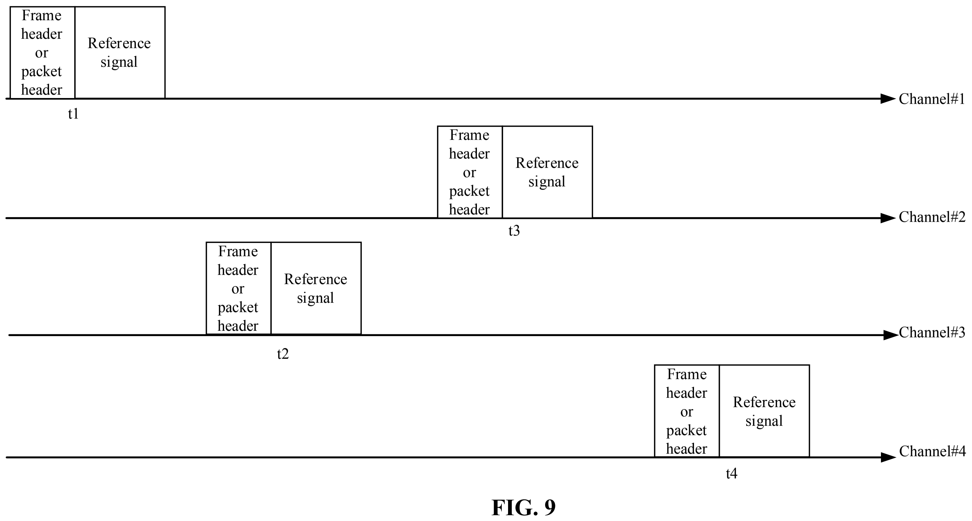

FIG. 9 illustrates a schematic structure diagram of frame headers or packet headers being sent before sending reference signals. In the example of FIG. 9, the multiple frequency domain resources include channel # 1, channel # 3, channel # 2, and channel # 4, and before sending the reference signals, the AMP device firstly sends frame headers or packet headers. The frame headers or packet headers carry time length information of the frequency domain resources occupied by the reference signals, and may further carry other information of the reference signals, such as information of the sending end device, information of the receiving end device, synchronization information, configuration information of the reference signals, or the like.

In some embodiments, the reference signals use on off keying (OOK)-based orthogonal frequency division multiplexing (OFDM) (OOK-based OFDM) waveforms.

In some embodiments, when the AMP device sends the reference signals by using the multiple frequency domain resources, a reference signal is sent by using all or part of the resources on each frequency domain resource. For example, when the AMP device sends reference signals by using the multiple frequency domain resources, a reference signal is sent by using a part or all of the subcarriers on each frequency domain resource.

In some embodiments, the reference signal is sent on target subcarrier(s) in a frequency domain resource, and the target subcarrier(s) includes one or more subcarriers. For example, it is assumed that the frequency domain resource is a channel and one channel includes 64 subcarriers. When the AMP device uses the channel, only the middle 16 subcarriers are used to send the reference signal.

In some embodiments, the target subcarrier(s) is predefined, or configured by a network device.

In some embodiments, when the AMP device sends reference signals by using multiple frequency domain resources, a reference signal is sent by using a part of the resources on each frequency domain resource, and "which part of the frequency domain resources is specifically used" may be configured by a network device (may be semi-statically configured or dynamically configured), or stipulated by a protocol, or determined based on at least one of the ID of the AMP device and the ID of the receiving end device in combination with a preset relationship.

For example, if the frequency domain resources include 64 subcarriers, which are numbered 0-63, the target subcarrier(s) may be subcarrier 31 or 33, and subcarrier 32 may be the central subcarrier, or the target subcarrier(s) may include the middle 13 subcarriers.

In some embodiments, a value of a modulation symbol on each of the target subcarrier(s) is predefined, or configured by a network device. For example, the value of the modulation symbol on each subcarrier may be fixed. Alternatively, the fixed value may be 1, - 1, 0.707 + j * 0.707, or the like, or the value of the modulation symbol on each subcarrier may be determined according to a preset rule, for example, the value on subcarrier # 1 is - 1, the value on subcarrier # 2 is 1, or the like.

In some embodiments, the AMP device alternately sends reference signals on the multiple frequency domain resources through frequency hopping.

In some embodiments, the multiple frequency domain resources are determined based on the first frequency hopping pattern.

For example, the AMP device may alternately send reference signals on multiple frequency domain resources based on the first frequency hopping pattern.

In some embodiments, the first frequency hopping pattern may be used to indicate frequency domain resources that are sequentially hopped when the AMP device sends the reference signals. For example, the first frequency hopping pattern is used to indicate indexes of the multiple frequency domain resources. The indexes of the multiple frequency domain resources represent frequency domain resources that are sequentially hopped by the reference signals.

In some embodiments, the multiple frequency domain resources include all of M frequency domain resources.

That is, the AMP device may perform the frequency hopping in all frequency domain resources.

In some embodiments, the M frequency domain resources are predefined, or configured by a network device.

In some implementations, the operating frequency band or the deployment frequency band of the AMP device may be divided into M frequency domain resources, and different frequency domain resources may overlap or not overlap. As a specific example, as illustrated in FIG. 6, in the WiFi system, the bandwidth of 2.4 GHz to 2.497 GHz may be divided into 14 different channels, that is, M frequency domain resources may be the 14 channels, and the multiple frequency domain resources may include a part or all of the 14 channels.

In some embodiments, the multiple frequency domain resources are frequency domain resources allocated by the network device for the AMP.

In other embodiments, the multiple frequency domain resources include a part of of M frequency domain resources.

That is, the AMP device performs frequency hopping among a part of frequency domain resources.

Therefore, in the embodiments of the present disclosure, the AMP device may flexibly select frequency domain resources for sending the reference signals.

For example, the AMP device performs frequency hopping in the first frequency domain resource set, and the first frequency domain resource set includes a part of M frequency domain resources.

Alternatively, the first frequency domain resource set may be predefined, or may be preconfigured or dynamically configured.

In some embodiments, the first frequency domain resource set may be adjusted according to a specific application scenario, for example, when the positioning range is small, multiple frequency domain resources with greater frequency difference(s) may be selected to form the first frequency domain resource set to provide positioning accuracy, or when the positioning range is large, multiple frequency domain resources with less frequency difference(s) may be selected to form the first frequency domain resource set to avoid the problem of integer ambiguity.

In some embodiments, the M frequency domain resources are 14 channels illustrated in FIG. 6, the first frequency domain resource set may include channel 1 and channel 6, or may include channel 2, channel 7, and channel 8. The AMP device performs frequency hopping among the channels included in the first frequency domain resource set.

As an example, the M frequency domain resources are 14 channels, which are denoted as channel # 0 to channel # 13 respectively, then the first frequency hopping pattern may indicate channel indexes of the 14 channels, that is, the AMP device may frequency hopping among the 14 channels, or the first frequency hopping pattern may indicate a part of the 14 channels, such as channel 1 and channel 6, then the AMP device may perform frequency hopping between the channel 1 and channel 6.

In some embodiments, the first frequency hopping pattern is predefined.

In some embodiments, the first frequency hopping pattern is configured by a network device, for example, the first frequency hopping pattern is configured semi-statically, or dynamically.

In some embodiments, the first frequency hopping pattern is determined by the AMP device. For example, the first frequency hopping pattern is determined based on Identity (ID) information of the AMP device.

In some embodiments, the first frequency hopping pattern is determined according to a preset rule.

For example, the i-th frequency domain resource among the multiple frequency domain resources is the frequency domain resource i among M frequency domain resources. As an example, the multiple frequency domain resources include four frequency domain resources, the first frequency domain resource is channel 1, the second frequency domain resource is channel 2, the third frequency domain resource is channel 3, and the fourth frequency domain resource is channel 4.

For another example, the (i+1)-th frequency domain resource and the i-th frequency domain resource are separated by x frequency domain resources.

As an example, the multiple frequency domain resources include 4 frequency domain resources, x frequency domain resources are 2 channels, the first frequency domain resource is channel 1, then the second frequency domain resource is channel 3, the third frequency domain resource is channel 5, and the fourth frequency domain resource is channel 7.

In some embodiments, the first frequency hopping pattern is determined based on a sequence.

For example, the first frequency hopping pattern is generated based on a Pseudo-Noise (PN) sequence.

In some embodiments, the first frequency hopping pattern is determined based on the random sequence 010010. A value of 0 indicates that the reference signal is sent on the frequency domain resource 0 (for example, channel 0), and a value of 1 indicates that the reference signal is sent on the frequency domain resource 1 (for example, channel 1).

In some embodiments, the AMP device sends the reference signals on the multiple frequency domain resources simultaneously, or the AMP device sends the reference signals on at least two different frequency domain resources simultaneously.

In some embodiments, the AMP device and other AMP devices use different frequency domain resources to send reference signals at the same time. For example, at a first time, if the first AMP device sends the reference signal on channel 1, the second AMP device sends the reference signal on a channel other than channel 1.

In some embodiments, the multiple frequency domain resources may include multiple available frequency domain resources among M frequency domain resources. The available frequency domain resources may be idle frequency domain resources determined according to the monitoring result by monitoring the frequency domain resources.

Embodiment 1: The multiple frequency domain resources are preempted or acquired by the AMP device.

For example, the AMP device may monitor on multiple frequency domain resources and determine the frequency domain resources for sending the reference signals according to the monitoring result.

In some specific embodiments, the AMP device may sequentially monitor according to the frequency domain resources involved in the first frequency hopping pattern, determine whether the frequency domain resources are available, and further send the reference signals according to the monitoring result.

For example, if the first frequency hopping pattern relates to the first frequency domain resource and the second frequency domain resource, and the second frequency domain resource is the next hop frequency domain resource of the first frequency domain resource, then the AMP device may monitor before sending the reference signal on the first frequency domain resource.

Case 1: When the first frequency domain resource is idle, a reference signal is sent on the first frequency domain resource.

Case 2: The first frequency domain resource is occupied (in other words, the first frequency domain resource is busy).

Manner 1: The AMP device may skip the first frequency domain resource, perform monitoring on the second frequency domain resource, and determine whether the second frequency domain resource is available. In a case that the second frequency domain resource is available, a reference signal is sent on the second frequency domain resource.

Manner 2: The AMP device continues to monitor the first frequency domain resource until the first frequency domain resource is available, that is, the AMP device sequentially sends the reference signals according to a predetermined frequency hopping pattern without skipping the sending of the reference signal.

Manner 3: The AMP device temporarily skips the sending of the reference signal on the first frequency domain resource, performs monitoring on the second frequency domain resource, and determines whether the second frequency domain resource is available. When the second frequency domain resource is available, the reference signal is sent on the second frequency domain resource. That is, the reference signal is sequentially attempted to be sent according to the predetermined frequency hopping pattern regardless of whether the reference signal is successfully sent on the frequency domain resource in the first frequency hopping pattern. After traversing all the frequency domain resources in the first frequency hopping pattern, monitoring is performed sequentially on all the unavailable frequency domain resources in the first frequency hopping pattern to attempt to send the reference signal.

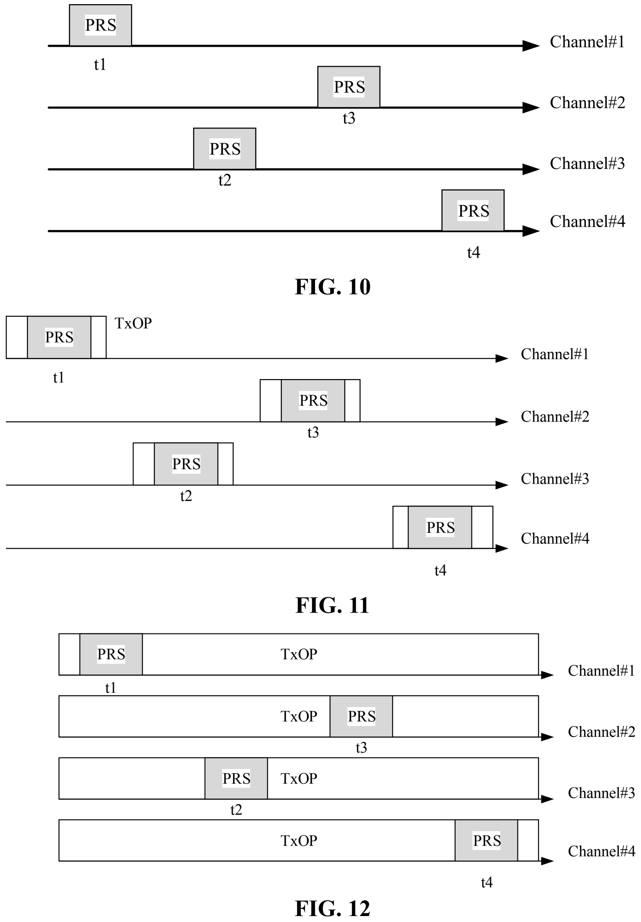

As an example illustrated with reference to FIG. 10, the first frequency hopping pattern indicates that the frequency domain resources that the AMP device sequentially hops are: channel # 1, channel # 3, channel # 2, and channel # 4. If a reference signal needs to be sent on channel # 1 at t1, carrier monitoring on channel # 1 needs to be completed before t1. If the channel is monitored to be idle, the reference signal may be sent on channel # 1. Alternatively, if channel # 1 is in a busy state, the reference signal cannot be sent on channel # 1.

For the manner 1, the AMP device may skip the sending of the reference signal on the channel # 1, and send the reference signal on the channel # 3 at t2. Before sending the reference signal on the channel # 3, it is also necessary to perform carrier monitoring to determine whether the channel # 3 is idle. The reference signal is sent on the channel # 3 when the channel # 3 is idle.

For the manner 2, the AMP device continues to perform carrier monitoring on channel # 1 until channel # 1 is idle, and then sends the reference signal. For example, if the channel # 1 is monitored to be idle at the time t1'= t1 + Δt1, the reference signal is sent. At this time, there may be two manners to send subsequent signals.

Manner 2-1: The reference signal is sent on channel # 3 at time t2. Before sending the reference signal on the channel # 3, it is also necessary to perform carrier monitoring to determine whether the channel # 3 is idle. If the channel # 3 is still busy, the AMP device will continue monitoring until the channel # 3 is idle, and then send the reference signal. For example, when the channel # 3 is monitored to be idle at time t2'= t2 + Δ t2, the reference signal is sent. This manner 2-1 is suitable for a case where Δ t (including Δ t1, Δ t2, and the delay time corresponding to each time of sending) is relatively less, which may ensure that the sending of the signal of channel # 1 is completed before time t2. Therefore, it may be necessary to limit the number of times or maximum duration that the AMP device continuously monitors on each channel, for example, if the channel # 1 is monitored to be busy for Z consecutive times, or if the busy duration exceeds T, the sending of the reference signal on the channel # 1 is abandoned. The corresponding receiver only needs to monitor the reference signal of channel # 1 during the period of [t1, t1 + T].

Manner 2-2: The reference signal is sent on channel # 3 at t2 '= t2 + Δt1 (that is, the subsequent signal is sent with a delay of Δt1). Before sending the reference signal on the channel # 3, the AMP device needs to perform carrier monitoring to determine whether the channel # 3 is idle. If the channel # 3 is still busy, the AMP device will continue monitoring until the channel # 3 is idle, and then send the reference signal. For example, until t2"= t2'+ Δt2 = t2 + Δt1 + Δt2 when the channel # 3 is monitored to be idleat, the reference signal is sent. This manner 2-2 is suitable for a case where Δ t is great, but the time when the reference signal is sent is affected by the previous reference signal and is superimposed. The corresponding receiving end device needs to monitor the reference signal in a greater time range.

For the manner 3, the AMP device temporarily skips the sending of the reference signal on channel # 1 (the sending of the reference signal on channel # 1 fails), and monitors on channel # 3 to determine whether channel # 3 is available. When channel # 3 is available, the reference signal is sent on channel # 3. After attempting to send the reference signals in all four channels, if the sending of the reference signals on channel # 1 and channel # 2 fails, and the sending of the reference signals on channel # 3 and channel # 4 is successful, then the reference signals are re-attempted to be sent on channel # 1 and channel # 2.

In some embodiments, the frequency domain resources in the first frequency hopping pattern may be grouped, and the frequency domain resources in one group may be used to determine one phase difference data. Alternatively, the frequency difference value(s) of the frequency domain resources in each group is great. Thus, the phase difference data determined according to the reference signals on the frequency domain resources in this group is beneficial for improving positioning accuracy. If one frequency domain resource in a group of frequency domain resources is occupied, the sending of reference signals on other frequency domain resources in the same group of frequency domain resources may be skipped, and the monitoring may be performed on the next group of frequency domain resources to send the reference signals.

For example, in the example of FIG. 10, channel # 1 and channel # 3 may be divided into one group, and channel # 2 and channel # 4 may be divided into one group. If sending of the reference signal on channel # 1 fails, sending of the reference signal on channel # 3 may be skipped, and the reference signals are attempted to be sent in the next group of channels.

Embodiment 2: The multiple frequency domain resources are preempted by the network device for the AMP device.

For example, the multiple frequency domain resources are preempted or acquired by the network device through monitoring, and the multiple frequency domain resources are shared by the network device with the AMP device.

In some embodiments, the network device may monitor the frequency domain resources in the first frequency hopping pattern to acquire a transmission opportunity (TXOP) on the frequency domain resource.

Alternatively, the network device may share part or all of the TXOPs acquired on the frequency domain resources with the AMP device.

In some embodiments, the starting positions and/or lengths of the TXOPs acquired by the network device on the frequency domain resources in the first frequency hopping pattern are different.

For example, as illustrated in FIG. 11, for the specific example in FIG. 10, the network device may acquire TXOPs on channel # 1, channel # 3, channel # 2, and channel # 4, respectively, and the starting positions of the TXOPs may be different. Further, if a part of the acquired TXOPs may be shared with the AMP device, the AMP device may sequentially send reference signals on channel # 1, channel # 3, channel # 2, and channel # 4 by using the TXOPs shared by the network device according to the first frequency hopping pattern.

In some embodiments, the starting position and lengths of the TXOPs acquired by the network device on the frequency domain resources in the first frequency hopping pattern are the same.

For example, as illustrated in FIG. 12, for the specific example in FIG. 10, the network device may simultaneously acquire TXOPs on channel # 1, channel # 3, channel # 2, and channel # 4, and the starting positions and lengths of the TXOPs are the same. Further, a part of the acquired TXOPs may be shared with the AMP device, and the AMP device may sequentially send reference signals on channel # 1, channel # 3, channel # 2, and channel # 4 by using the TXOPs shared by the network device according to the first frequency hopping pattern.

In some embodiments, if the network device fails to preempt the frequency domain resources in the first frequency hopping pattern, the network device may indicate to the AMP device the frequency domain resources that are preempted unsuccessfully, and the network device shares TXOP information corresponding to the frequency domain resources that are preempted successfully with the AMP device, so that the AMP device may use the starting times and the durations of these frequency domain resources.

Further, when the AMP device sends the reference signals based on the first frequency hopping pattern, the AMP device may skip the frequency domain resources that are preempted unsuccessfully, and send the reference signals only using the TXOPs allocated by the network device on the frequency domain resources that are preempted successfully.

For example, in the specific example of FIG. 10, the network device may acquire TXOPs on channel # 1, channel # 3, channel # 2, and channel # 4. If channel # 3 is preempted unsuccessfully, and channel # 1, channel # 2, and channel # 4 are preempted successfully, further, the network device may indicate to the AMP device that channel # 3 is preempted unsuccessfully, and share a part of the TXOPs acquired on channel # 1, channel # 2, and channel # 4 with the AMP device. When the AMP device sends the reference signals according to the first frequency hopping pattern, the sending of the reference signal on channel # 3 may be skipped and the reference signals are sequentially sent on channel # 1, channel # 2, and channel # 4 by using the TXOPs shared by the network device.

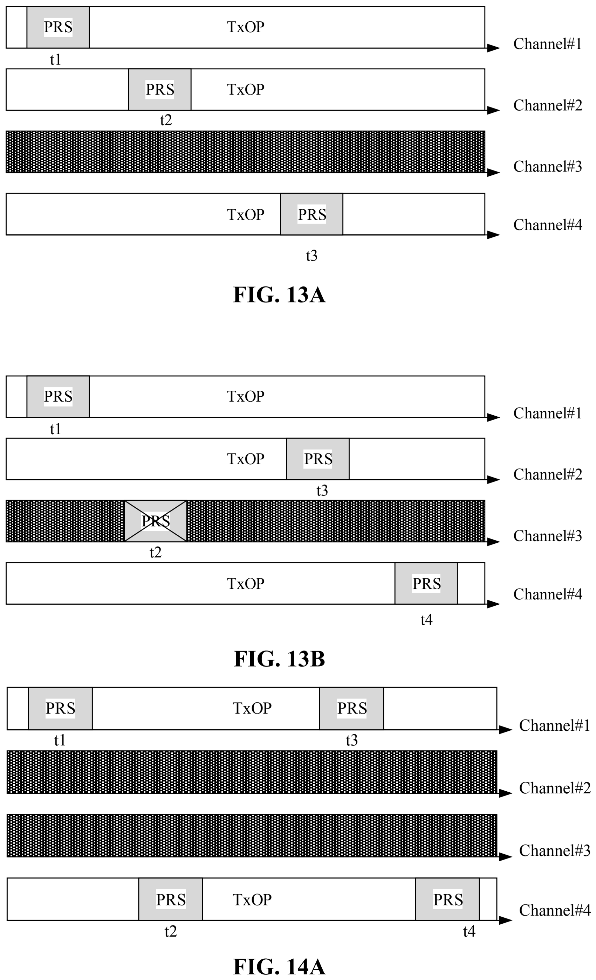

Alternatively, the sending of the reference signal on the channel # 3 being skipped here may mean that at time t2, the AMP device does not send the reference signal on the channel # 3, but sends the reference signal on the next hop channel of the channel # 3 (that is, the channel # 2). As illustrated in FIG. 13A, based on this manner, the sending time of the reference signal on the subsequent channel is sequentially shifted forward. Alternatively, the sending of the reference signal on the channel # 3 being skipped here may mean that at time t2, the AMP device does not send the reference signal on channel # 3 and does not send the reference signal on other channels. As illustrated in FIG. 13B, based on this manner, the sending time of the reference signal on the subsequent channel does not change.

For another example, for the specific example in FIG. 10, the network device may acquire the TXOPs on the channel # 1, the channel # 3, the channel # 2, and the channel # 4. If the channel # 2 and the channel # 3 are preempted unsuccessfully, and the channel # 1 and the channel # 4 are preempted successfully, further, the network device may indicate to the AMP device that the channel # 2 and the channel # 3 are preempted unsuccessfully, and share a part of the TXOPs acquired on the channel # 1 and the channel # 4 with the AMP device. When the AMP device sends the reference signals according to the first frequency hopping pattern, the sending of the reference signals on channel # 2 and channel # 3 may be skipped and the reference signals are sequentially sent on channel # 1 and channel # 4 by using the TXOPs shared by the network device.

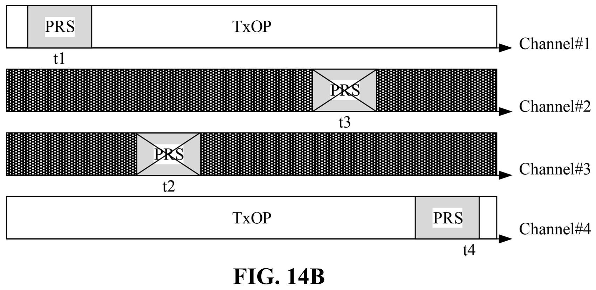

Alternatively, the sending of the reference signals on the channel # 2 and the channel # 3 being skipped here may mean that at sending times of the reference signals on the channel # 2 and the channel # 3, the AMP device does not send the reference signals on the channel # 2 and channel # 3, but sends the reference signal on the subsequent available channel (i.e., channel # 4). As illustrated in FIG. 14A, based on this manner, the sending times of the reference signals on the subsequent channel is sequentially shifted forward. Alternatively, the sending of the reference signals on the channel # 2 and the channel # 3 being skipped here may mean that at sending times of the reference signals on the channel # 2 and the channel # 3, the AMP device does not send the reference signal on channel # 2 and channel # 3 and does not send the reference signal on other channels. As illustrated in FIG. 14B, based on this manner, the sending time of the reference signal on the subsequent channel does not change.

Alternatively, the time t1, the time t2, the time t3, and the time t4 in the above examples may be considered as predetermined time units for sending the reference signals. When a time unit, for sending the reference signal, preempted by the AMP device, or a time unit, for sending the reference signal, configured by the network device for the AMP device (for example, preempted by the network device and shared with the AMP device) is actually available for sending the reference signal, the time unit may be considered as an available time unit.

In some embodiments, the AMP device may send one reference signal on one frequency domain resource, or may send multiple reference signals.

In some embodiments, there is the following association relationship among the total number of times W that the AMP device sends the reference signals on multiple frequency domain resources, the duration $T_1$ that the AMP device sends the reference signal once, and the time T that the network schedules the AMP device to communicate: $W * T_1 \leq T$. Here, W is a positive integer, and T and T1 are both positive numbers. Alternatively, any two of W, $T_1$, and T may be configured, and then the value of the remaining one parameter may be determined according to the relationship among the three values.

In some embodiments, the number of times that the AMP device sends the reference signals (which may also be referred to as the number of times of frequency hopping, that is, the reference signals are sent on different frequency domain resources, which is equivalent to sending the reference signal through frequency hopping) is stipulated by the protocol, or the number of times that the AMP device sends the reference signals is configured by the network (which may be semi-statically configured or dynamically configured).

In some embodiments, the duration of sending the reference signal once by the AMP device is stipulated by the protocol, or the duration of sending the reference signal once by the AMP device is configured by the network (which may be semi-statically configured or dynamically configured).

In some embodiments, the time interval between two consecutive frequency-hopped transmissions of the reference signals by the AMP device is stipulated by the protocol, or the time interval between two consecutive frequency-hopped transmissions of the reference signals by the AMP device is configured by the network (which may be semi-statically configured or dynamically configured).

In some embodiments, the maximum duration that the AMP device sends a reference signal is stipulated by the protocol, or the maximum duration that the AMP device sends a reference signal is configured by the network (which may be semi-statically configured or dynamically configured).

In some embodiments, different AMP devices determine frequency domain resources for sending reference signals for ranging and/or positioning based on dual-frequency phase differences by adopting a same manner. That is, different terminals may use the same association relationship, and determine the frequency domain resource used on the (i+1)-th available time unit based on the frequency domain resource used on the i-th available time unit.

In some embodiments, different AMP devices determine frequency domain resources for sending reference signals for ranging and/or positioning based on dual-frequency phase differences by adopting different manners. That is, each AMP device uses an exclusive association relationship to determine frequency domain resources for sending reference signals for ranging and/or positioning based on dual-frequency phase differences.

In some embodiments, different AMP devices send reference signals for ranging and/or positioning based on dual-frequency phase differences in the Frequency-division multiplexing (FDM) manner.

In some embodiments, the number of frequency domain resources used by the AMP device to send a reference signal on the same available time unit is one or more. Alternatively, the available time unit may be a time unit configured by the network to the AMP device, or the available time unit may be a time unit preempted by the AMP device, or the available time unit may be a time unit preempted by the network device and shared with the AMP device.

For example, the AMP device may send the reference signal on only one frequency domain resource on each of the available time units.

For another example, the AMP device may send the reference signal on at least two frequency domain resources on each of the available time units.

For another example, the AMP device may send the reference signal on one frequency domain resource on one part of the available time units, and the AMP device may send the reference signal on at least two frequency domain resources on another part of the available time units.

In some embodiments, the time unit is one of the following: symbol, slot, mini-slot, subframe, second, millisecond, microsecond.

In some embodiments, the frequency domain resource used for sending the reference signal on the i-th available time unit is different from the frequency domain resource used for sending the reference signal on the (i+1)-th available time unit. Here, i is an integer greater than or equal to 0. That is, sending reference signals on different frequency domain resources is equivalent to sending the reference signals through frequency hopping.

In some embodiments, the interval between the frequency domain resource for sending the reference signal on the i-th available time unit and the frequency domain resource for sending the reference signal on the (i+1)-th available time unit is greater than or equal to X frequency domain units, X being a positive integer. Alternatively, the frequency domain unit is one of the following: a frequency domain resource, a channel, a system bandwidth, a carrier, a subcarrier, a physical resource block (PRB), a band width part (BWP), a megahertz (MHz), a kilohertz (kHz), or a hertz (Hz). That is, X may be an absolute bandwidth, for example, X MHz, X kHz, etc., or a relative interval, for example, X channels.

In some embodiments, the X frequency domain units are stipulated by a protocol, or the X frequency domain units are configured by a network (which may be semi-statically configured or dynamically configured).

In some embodiments, when the number of frequency domain resources used by the AMP device for sending the reference signal on the same available time unit is one, the frequency domain resource used by the AMP device on the (i+1)-th available time unit is determined based on at least one of the following: the frequency domain resource used by the AMP device on the i-th available time unit, a frequency hopping interval, a total number of frequency domain resources in the deployment frequency band corresponding to the AMP device, a minimum frequency domain resource number in the deployment frequency band corresponding to the AMP device, and a maximum frequency domain resource number in the deployment frequency band corresponding to the AMP device.

Specifically, the unit of the frequency hopping interval may be the frequency domain resource. Of course, the unit of the frequency hopping interval may be another frequency domain resource, which is not limited in the embodiments of the present disclosure.

In some embodiments, the frequency hopping interval is a fixed value. For example, the frequency hopping interval is fixed to one or more frequency domain resources.

In some embodiments, the frequency hopping intervals are cyclically selected, according to the first order, from multiple preset frequency hopping intervals. Alternatively, the first order is stipulated by the protocol, or the first order is configured by the network (which may be semi-statically configured or dynamically configured).

Specifically, for example, four frequency hopping intervals ($\Delta F$) are configured in advance: $\Delta F1$, $\Delta F2$, $\Delta F3$, and $\Delta F4$, that is, multiple preset frequency hopping intervals are $\Delta F1$, $\Delta F2$, $\Delta F3$, and $\Delta F4$. When frequency hopping is performed, the frequency hopping intervals are cyclically selected in the order of [$\Delta F1 => \Delta F2 => \Delta F3 => \Delta F4 => \Delta F1...$].

In some embodiments, the frequency hopping interval is determined from multiple preset frequency hopping intervals based on the value of i. For example, it is assumed that the number of multiple preset frequency hopping intervals is L, and the used frequency hopping interval is determined according to the following formula: i mod L. Here, mod represents a modulo operation. For example, when i mod L = y1, $\Delta F1$ is selected, and when i mod L = y2, $\Delta F2$ is selected. Here, y1 and y2 are used as examples, and there may be y3, y4, etc., which are not limited here. In addition, y1/y2, etc. may be a single value or a set of multiple values.

In some embodiments, the frequency hopping interval is determined from multiple preset frequency hopping intervals based on the index value of the frequency domain resource used on the i-th available time unit. For example, it is assumed that the number of multiple preset frequency hopping intervals is L. The used frequency hopping interval is determined according to the following formula: y = i mod L. Here, y is the index value of the frequency domain resource used on the i-th available time unit, and mod represents the modulo operation.

In some embodiments, the values of the multiple preset frequency hopping intervals have positive and/or negative values. For example, when there are multiple $\Delta F$s, there may be "+" and "-" in the values, for example, +2 and - 2 may be taken as two different values.

In some embodiments, the frequency hopping interval may also be referred to as the interval between frequency domain resources (for example, channels) on two adjacent available time units.

In some embodiments, the frequency domain resource used by the AMP device on the (i+1)-th available time unit is determined according to the following formula 1:

$$F^{(i+1)} = (F^{(i)} + \Delta F) \bmod M \qquad \text{(formula 1)}$$

Here, $F^{(i+1)}$ represents the index of frequency domain resource used by the AMP device on the (i+1)-th available time unit, $F^{(i)}$ represents the index of frequency domain resource used by the AMP device on the i-th available time unit, $\Delta F$ represents the frequency hopping interval, M represents the total number of frequency domain resources in the deployment frequency band corresponding to the AMP device, and mod represents a modulo operation.

It should be noted that a simple modification may be made to the above formula 1, and the modified formula also falls within the scope of protection of the present disclosure.

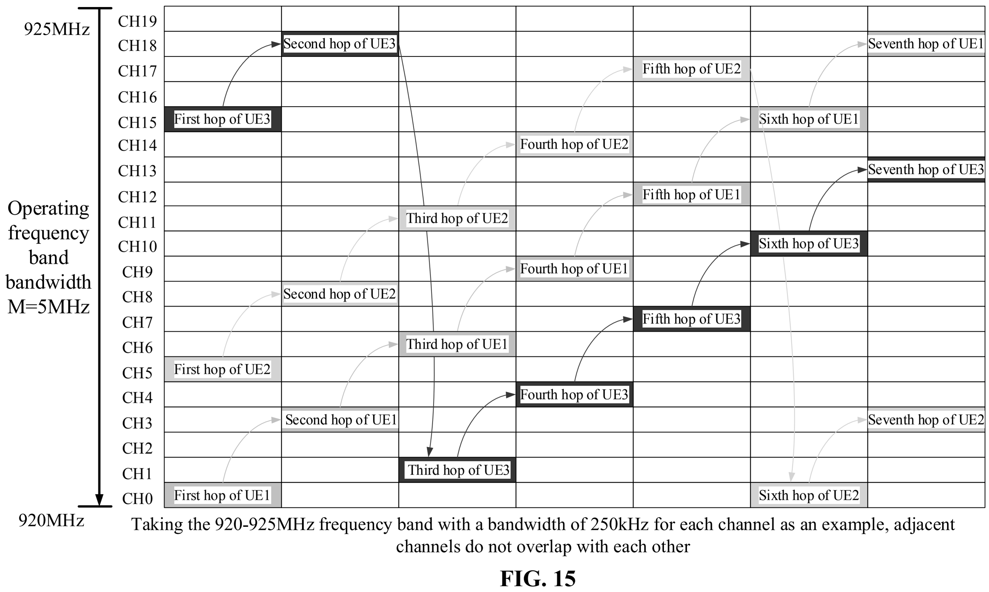

Specifically, for example, as illustrated in FIG. 15, it is assumed that the frequency domain resource is a channel (CH), the deployment frequency band corresponding to the AMP device is 5MHz (920-925MHz), and the system bandwidth of 5MHz (920-925MHz) is divided into 20 channels with a bandwidth of 250kHz, that is, M = 20. The AMP device may be the UE 1, the UE 2, or the UE 3 illustrated in FIG. 15, and the frequency domain resource used in each available time unit may be specifically determined based on the above formula 1. The first frequency domain resource initially selected by the UE 1 is CH0, the first frequency domain resource initially selected by the UE 2 is CH5, and the first frequency domain resource initially selected by the UE 3 is CH15.

In some embodiments, where $F^{(i)}$ is a frequency domain resource available to the AMP device, let $F^{(r)} = F^{(i)}$, the available frequency domain resource used by the AMP device on the (i+1)-th available time unit is determined according to the following formula 2:

$$F^{(r+1)} = (F^{(r)} + \Delta F) \bmod M \qquad \text{(formula 2)}$$

If $F^{(r+1)}$ is a frequency domain resource available to the AMP device, then $F^{(i+1)} = F^{(r+1)}$.

If $F^{(r+1)}$ is a frequency domain resource not available to the AMP device, let r = r+1, and $F^{(r+1)}$ is calculated based on the updated r.

$F^{(i+1)}$ represents the index of available frequency domain resource used by the AMP device on the (i+1)-th available time unit, $F^{(i)}$ represents the index of available frequency domain resource used by the AMP device on the i-th available time unit, $\Delta F$ represents the frequency hopping interval, and M represents the total number of frequency domain resources in the deployment frequency band corresponding to the AMP device.

It should be noted that a simple modification may be made to the above formula 2, and the modified formula also falls within the scope of protection of the present disclosure.

Specifically, in practical applications, all frequency domain resources (for example, channels) in the deployment frequency band may not be allocated to one AMP device. That is, the frequency domain resources that may be used by the AMP device are only a part of the entire system resource. When the frequency domain resource determined based on the above formula 2 is not available, the subsequent frequency domain resource is iteratively selected based on the formula 2 until an available frequency domain resource is selected.

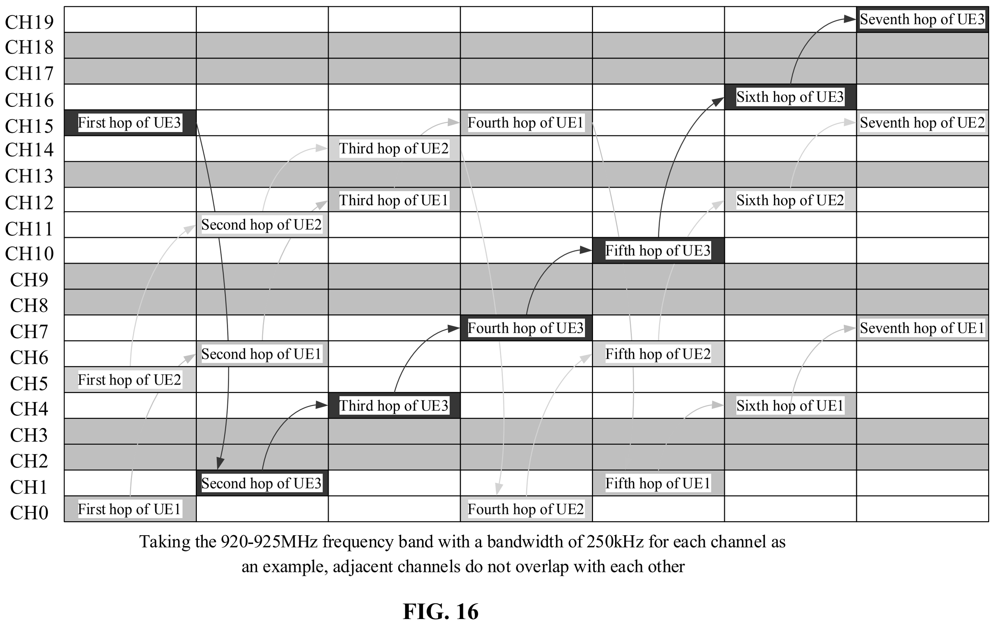

For example, as illustrated in FIG. 16, it is assumed that the frequency domain resource is a channel (CH), the deployment frequency band corresponding to the AMP device is 5 MHz (920-925 MHz), and the system bandwidth of 5 MHz (920-925 MHz) is divided into 20 channels with a bandwidth of 250 kHz, that is, M = 20. Different from FIG. 15, for UE1, UE2, and UE3, CH2, CH3, CH8, CH9, CH13, CH17 and CH18 among the 20 channels are not available, and the frequency domain resource used in each available time unit may be specifically determined based on the above formula 2. The first frequency domain resource initially selected by UE1 is CH0, the first frequency domain resource initially selected by UE2 is CH5, and the first frequency domain resource initially selected by UE3 is CH15.

In some embodiments, the frequency domain resource used by the AMP device on the (i+1)-th available time unit is determined according to the following formula 3:

$$F^{(i+1)} = (F^{(i)} + \Delta F) \bmod (q+1) + p \qquad \text{(formula 3)}$$

Here, $F^{(i+1)}$ represents the index of frequency domain resource used by the AMP device on the (i+1)-th available time unit, $F^{(i)}$ represents the index of frequency domain resource used by the AMP device on the i-th available time unit, $\Delta F$ represents the frequency hopping interval, p represents the minimum frequency domain resource index in the deployment frequency band corresponding to the AMP device, and q represents the maximum frequency domain resource index in the deployment frequency band corresponding to the AMP device.

Here, $F^{(i)}$ and $F^{(i+1)}$ satisfy: $p \le F^{(i)} \le q$ and $p \le F^{(i+1)} \le q$.

It should be noted that a simple modification may be made to the above formula 3, and the modified formula also falls within the scope of protection of the present disclosure.

Specifically, for example, it is assumed that the frequency domain resource is a channel (CH), the minimum channel index in the deployment frequency band corresponding to the AMP device is CH4 (that is, p is CH4), and the maximum channel index in the deployment frequency band corresponding to the AMP device is CH23 (that is, q is CH23). In the case of $\Delta F=3$ channels, the above formula 3 may be $CH^{(i+1)}=(CH^{(i)}+3) \bmod 24+4$. For example, when the channel with index 4 is used on the i-th available time domain unit ($CH^{(i)}=CH4$), the channels used on the subsequent available time units are CH7, CH10, CH13, CH16, CH19, CH22, and CH5, respectively.

In some embodiments, when $F^{(i)}$ is a frequency domain resource available to the AMP device, let $F^{(r)} = F^{(i)}$, and the available frequency domain resource used by the AMP device on the (i+1)-th available time unit is determined according to the following formula 4:

$$F^{(r+1)} = (F^{(r)} + \Delta F) \bmod (q+1) + p \qquad \text{(formula 4)}$$

If $F^{(r+1)}$ is a frequency domain resource available to the AMP device, then $F^{(i+1)} = F^{(r+1)}$.

If $F^{(r+1)}$ is a frequency domain resource not available to the AMP device, let r = r+1, and F(r+1) is calculated based on the updated r.

Here, $F^{(i+1)}$ represents the index of available frequency domain resources used by the AMP device on the (i+1)-th available time unit, $F^{(i)}$ represents the index of available frequency domain resource used by the AMP device on the i-th available time unit, $\Delta F$ represents the frequency hopping interval, p represents the minimum frequency domain resource index in the deployment frequency band corresponding to the AMP device, and q represents the maximum frequency domain resource index in the deployment frequency band corresponding to the AMP device.

Here, $F^{(i)}$ and $F^{(i+1)}$ satisfy: $p \le F^{(i)} \le q$ and $p \le F^{(i+1)} \le q$.

It should be noted that a simple modification may be made to the above formula 4, and the modified formula also falls within the scope of protection of the present disclosure.

Specifically, in practical applications, all frequency domain resources (for example, channels) in the deployment frequency band may not be allocated to one AMP device. That is, the frequency domain resources that may be used by the AMP device are only a part of the entire system resource. When the frequency domain resource determined based on the above formula 4 is not available, the subsequent frequency domain resources are iteratively selected based on the formula 4 until an available frequency domain resource is selected.

In some embodiments, the frequency domain resource used by the AMP device on the (i+1)-th available time unit is determined according to the following formula 5:

$$F^{(i+1)} = (F^{(i)} + \Delta F) \bmod (q_k+1) + p_k \qquad\qquad \text{(formula 5)}$$

$F^{(i+1)}$ represents the index of frequency domain resource used by the AMP device on the (i+1)-th available time unit, $F^{(i)}$ represents the index of frequency domain resource used by the AMP device on the i-th available time unit, $\Delta F$ represents the frequency hopping interval, $p_k$ represents the minimum frequency domain resource index in the frequency domain resource set k associated with the AMP device in the deployment frequency band corresponding to the AMP device, and $q_k$ represents the maximum frequency domain resource index in the frequency domain resource set k associated with the AMP device in the deployment frequency band corresponding to the AMP device.

Here, $F^{(i)}$ and $F^{(i+1)}$ satisfy: $p_k \leq F^{(i)} \leq q_k$ and $p_k \leq F^{(i+1)} \leq q_k$.

It should be noted that a simple modification may be made to the above formula 5, and the modified formula also falls within the scope of protection of the present disclosure.

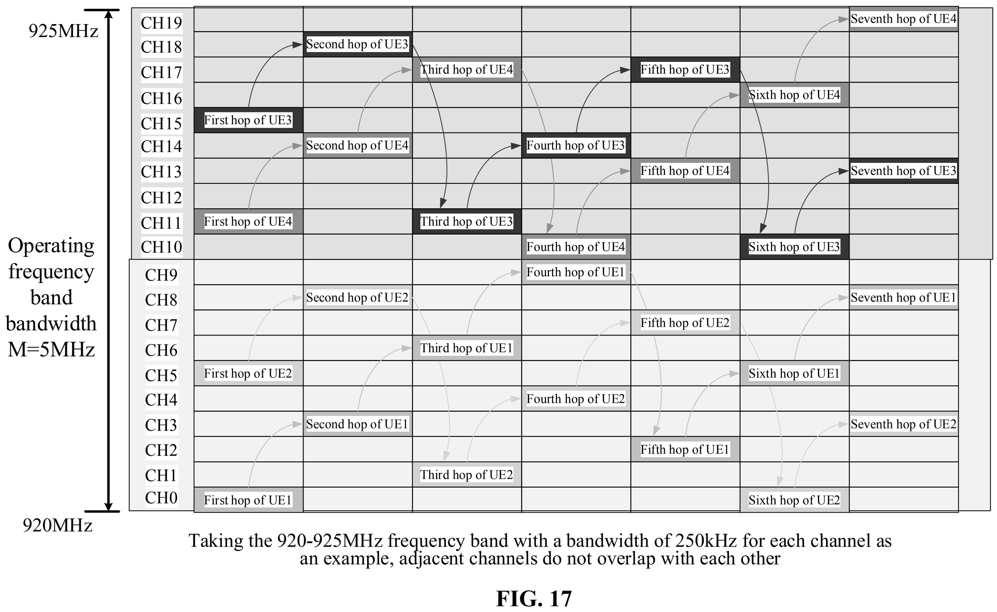

Specifically, for example, as illustrated in FIG. 17, it is assumed that the frequency domain resource is a channel (CH), the deployment frequency band corresponding to the AMP device is 5 MHz (920-925 MHz), and the system bandwidth of 5 MHz (920-925 MHz) is divided into 20 channels with a bandwidth of 250 kHz, that is, M = 20. The available frequency domain resource numbers in the deployment frequency band are p to q, and the frequency domain resources in the frequency band may be grouped (divided into at least two groups). The positional relationship of the frequency domain resources on two adjacent available time units in each group is similar to that in the solution of FIG. 15. Taking being divided into two groups as an example, the frequency domain resources of the first group are (p1-q1), and the frequency domain resources of the second group are (p2-q2). Here, p1 = p, p2 = q1+1, and q2 = q. Different from FIG. 15, UE1 and UE2 are associated with one frequency domain resource set (CH0-CH9), and UE3 and UE4 are associated with another frequency domain resource set (CH10-CH19). The frequency domain resource used in each available time unit may be specifically determined based on the above formula 5. The first frequency domain resource initially selected by UE1 is CH0, the first frequency domain resource initially selected by UE2 is CH5, the first frequency domain resource initially selected by UE3 is CH15, and the first frequency domain resource initially selected by UE4 is CH11.

In some embodiments, when $F^{(i)}$ is a frequency domain resource available to the AMP device, let $F^{(r)} = F^{(i)}$, the available frequency domain resource used by the AMP device on the (i+1)-th available time unit is determined according to the following formula 6:

$$F^{(r+1)} = (F^{(r)} + \Delta F) \bmod (q_k+1) + p_k \qquad\qquad \text{(formula 6)}$$

If $F^{(r+1)}$ is a frequency domain resource available to the AMP device, then $F^{(i+1)} = F^{(r+1)}$.

If $F^{(r+1)}$ is a frequency domain resource not available to the AMP device, let r = r+1, and $F^{(r+1)}$ is calculated based on the updated r.

Here, $F^{(i+1)}$ represents the index of available frequency domain resource used by the AMP device on the (i+1)-th available time unit, $F^{(i)}$ represents the index of available frequency domain resource used by the AMP device on the i-th available time unit, $\Delta F$ represents the frequency hopping interval, $p_k$ represents the minimum frequency domain resource index in the frequency domain resource set k associated with the AMP device in the deployment frequency band corresponding to the AMP device, and $q_k$ represents the maximum frequency domain resource index in the frequency domain resource set k associated with the AMP device in the deployment frequency band corresponding to the AMP device.

Here, $F^{(i)}$ and $F^{(i+1)}$ satisfy: $p_k \leq F^{(i)} \leq q_k$, and $p_k \leq F^{(i+1)} \leq q_k$.

It should be noted that a simple modification may be made to the above formula 6, and the modified formula also falls within the scope of protection of the present disclosure.

Specifically, in practical applications, all frequency domain resources (for example, channels) in the deployment frequency band may not be allocated to one AMP device. That is, the frequency domain resources that may be used by the AMP device are only a part of the entire system resource. When the frequency domain resource determined based on the above formula 6 is not available, the subsequent frequency domain resources are iteratively selected based on the formula 6 until an available frequency domain resource is selected.

In some embodiments, the frequency domain resource used by the AMP device on the (i+1)-th available time unit is determined according to the following formula 7:

$$F^{(i+1)} = F^{(i)} + (-1)^{\text{init}} * (-1)^{S}\Delta F \qquad\qquad \text{(formula 7)}$$

Here, $F^{(i+1)}$ represents the index of the frequency domain resource used by the AMP device on the (i+1)-th available time unit, $F^{(i)}$ represents the index of the frequency domain resource used by the AMP device on the i-th available time unit, the value of init is 0 or 1, and $\Delta F$ represents the frequency hopping interval.

Here, the initialization value of S is 0, and when $F^{(i)} + (-1)^{\text{init}} * (-1)^{S}\Delta F < p$ or $F^{(i)} + (-1)^{\text{init}} * (-1)^{S}\Delta F > q$, S = S+1, and

$F^{(i+1)}$ is calculated based on the updated S. Here, p represents the minimum frequency domain resource index in the deployment frequency band corresponding to the AMP device, and q represents the maximum frequency domain resource index in the deployment frequency band corresponding to the AMP device.

Here, $F^{(i)}$ and $F^{(i+1)}$ satisfy: $p \leq F^{(i)} \leq q$ and $p \leq F^{(i+1)} \leq q$.

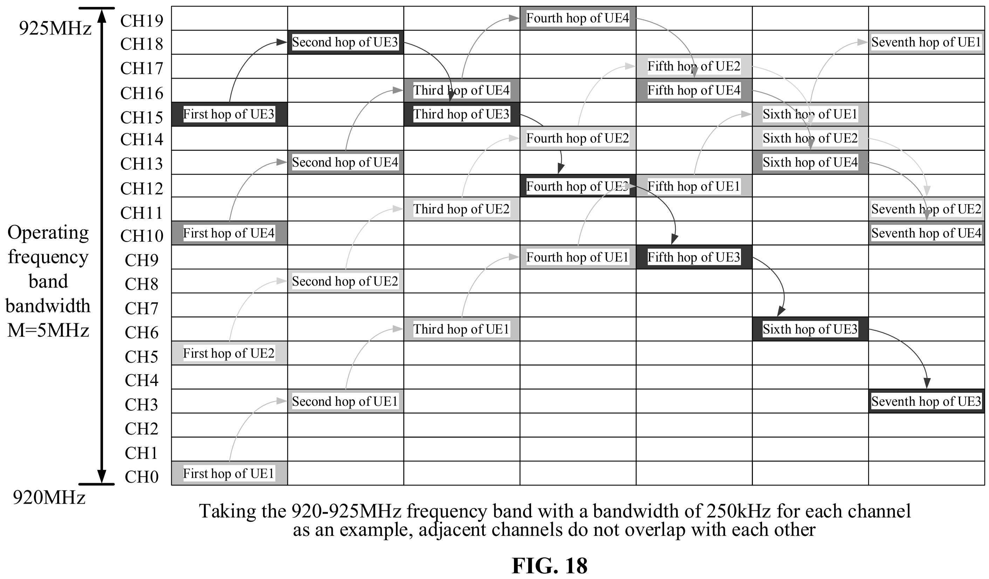

Specifically, for example, as illustrated in FIG. 18, it is assumed that the frequency domain resource is a channel (CH), the deployment frequency band corresponding to the AMP device is 5 MHz (920-925 MHz), and the system bandwidth of 5 MHz (920-925 MHz) is divided into 20 channels with a bandwidth of 250 kHz. The AMP device may be UE1, UE2, UE3, or UE4 as illustrated in FIG. 18, and the frequency domain resource used in each available time unit may be specifically determined based on the above formula 7. Taking UE2 as an example, when UE2 initially sends the reference signal by using CH5, the value of init is 0, and $\Delta F = 3$ channels, $F^{(i+1)} = F^{(i)} + (-1)^{init} * (-1)^S \Delta F = F(i) + (-1)^S * 3$. Here, $F^{(0)} = $ CH5, $F^{(1)} = F^{(0)} + (-1)^0 * 3 = $ CH8, $F^{(2)} = F^{(1)} + (-1)^0 * 3 = $ CH11, $F^{(3)} = F^{(2)} + (-1)^0 * 3 = $ CH14, $F^{(4)} = F^{(3)} + (-1)^0 * 3 = $ CH17. Since $F^{(4)} + (-1)° * 3 = $ CH20 > CH19, it is updated that $S = S+1 = 1$, then $F^{(5)} = F^{(4)} + (-1)^1 * 3 = $ CH14, $F^{(6)} = F^{(5)} + (-1)^1 * 3 = $ CH11. The method for determining frequency domain resources used in available time units for the other UEs in FIG. 18 is similar to that for the UE2, which will not be described repeatedly here. In FIG. 18, the first frequency domain resource initially selected by UE1 is CH0, the first frequency domain resource initially selected by UE2 is CH5, the first frequency domain resource initially selected by UE3 is CH15, and the first frequency domain resource initially selected by UE4 is CH10.

In some embodiments, when $F^{(i)}$ is a frequency domain resource available to the AMP device, let $F^{(r)} = F^{(i)}$, the available frequency domain resource used by the AMP device on the (i+1)-th available time unit is determined according to the following formula 8:

$$F^{(r+1)} = F^{(r)} + (-1)^{init} * (-1)^S \Delta F \qquad \text{(formula 8)}$$

If $F^{(r+1)}$ is a frequency domain resource available to the AMP device, then $F^{(i+1)} = F^{(r+1)}$.

If $F^{(r+1)}$ is a frequency domain resource not available to the AMP device, let $r = r+1$, and $F^{(r+1)}$ is calculated based on the updated r.

Here, $F^{(i+1)}$ represents the index of available frequency domain resource used by the AMP device on the (i+1)-th available time unit, $F^{(i)}$ represents the index of available frequency domain resource used by the AMP device on the i-th available time unit, the value of init is 0 or 1, and $\Delta F$ represents the frequency hopping interval.

Here, the initialization value of S is 0, and when $F^{(i)} + (-1)^{init} * (-1)^S \Delta F < p$ or $F^{(i)} + (-1)^{init} * (-1)^S \Delta F > q$, $S = S+1$, and $F(i+1)$ is calculated based on the updated S. Here, p represents the minimum frequency domain resource index in the deployment frequency band corresponding to the AMP device, and q represents the maximum frequency domain resource index in the deployment frequency band corresponding to the AMP device.

Here, $F^{(i)}$ and $F^{(i+1)}$ satisfy: $p \leq F^{(i)} \leq q$ and $p \leq F^{(i+1)} \leq q$.

It should be noted that a simple modification may be made to the above formula 8, and the modified formula also falls within the scope of protection of the present disclosure.

Specifically, in practical applications, all frequency domain resources (for example, channels) in the deployment frequency band may not be allocated to one AMP device. That is, the frequency domain resources that may be used by the AMP device are only a part of the entire system resource. When the frequency domain resource determined based on the above formula 8 is not available, the subsequent frequency domain resources are iteratively selected based on the formula 8 until the available frequency domain resource is selected.

In some embodiments, the frequency domain resource used by the AMP device on the (i+1)-th available time unit is determined according to the following formula 9:

$$F^{(i+1)} = F^{(i)} + (-1)^{init} * (-1)^S \Delta F \qquad \text{(formula 9)}$$

Here, $F^{(i+1)}$ represents the index of the frequency domain resource used by the AMP device on the (i+1)-th available time unit, $F^{(i)}$ represents the index of the frequency domain resource used by the AMP device on the i-th available time unit, the value of init is 0 or 1, and $\Delta F$ represents the frequency hopping interval.

Here, in the frequency domain resource set k associated with the AMP device in the deployment frequency band corresponding to the AMP device, the initialization value of S is 0. When $F^{(i)} + (-1)^{init} * (-1)^S \Delta F < p_k$ or $F^{(i)} + (-1)^{init} * (-1)^S \Delta F > q_k$, $S = S+1$, and $F^{(i+1)}$ is calculated based on the updated S. Here, $p_k$ represents the minimum frequency domain resource index in the frequency domain resource set k associated with the AMP device, and $q_k$ represents the maximum frequency domain resource index in the frequency domain resource set k associated with the AMP device.

Here, $F^{(i)}$ and $F^{(i+1)}$ satisfy: $p_k \leq F^{(i)} \leq q_k$ and $p_k \leq F^{(i+1)} \leq q_k$.

It should be noted that a simple modification may be made to the above formula 9, and the modified formula also falls within the scope of protection of the present disclosure.

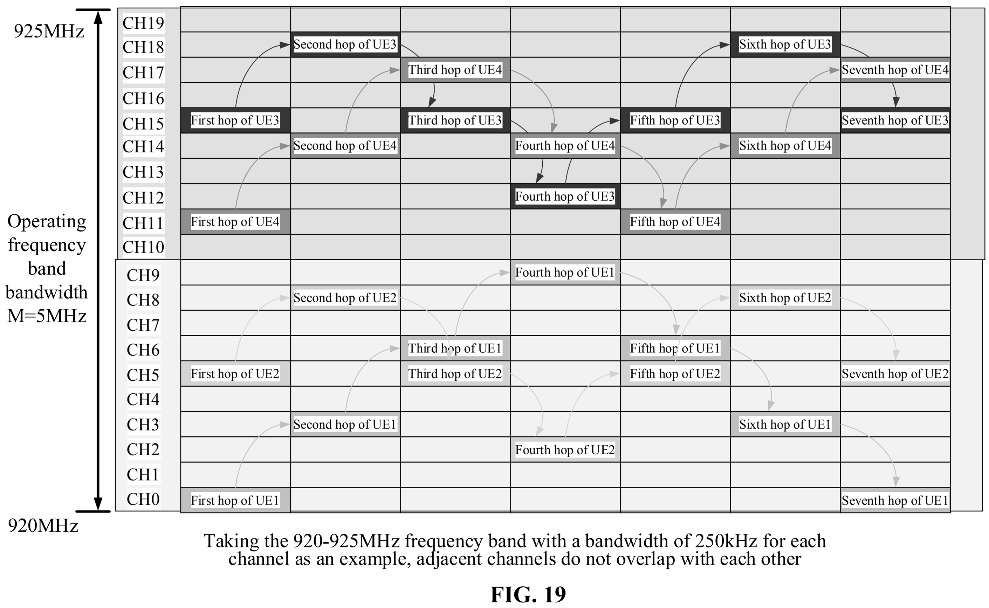

Specifically, for example, as illustrated in FIG. 19, it is assumed that the frequency domain resource is a channel (CH), the deployment frequency band corresponding to the AMP device is 5 MHz (920-925 MHz), and the system bandwidth of 5 MHz (920-925 MHz) is divided into 20 channels with a bandwidth of 250 kHz. The available frequency domain resource indexes in the deployment frequency band are p to q, and the frequency domain resources in the frequency band may be grouped (divided into at least two groups). The positional relationship of the frequency domain resources on two adjacent available time units in each group is similar to that in the solution of FIG. 18. Taking being divided into two groups as an example, the frequency domain resources of the first group are (p1-q1), and the frequency domain resources of the second group are (p2-q2). Here, p1 = p, p2 = q1+1, and q2 = q. Different from FIG. 18, UE1 and UE2 are associated with one frequency domain resource set (CH0-CH9), and UE3 and UE4 are associated with another frequency domain resource set (CH10-CH19). The frequency domain resource used in each available time unit may be specifically determined based on the above formula 9. The first frequency domain resource initially selected by UE1 is CH0, the first frequency domain resource initially selected by UE2 is CH5, the first frequency domain resource initially selected by UE3 is CH15, and the first frequency domain resource initially selected by UE4 is CH11.

In some embodiments, in a case where $F^{(i)}$ is a frequency domain resource available to the AMP device, let $F^{(r)} = F^{(i)}$, the available frequency domain resource used by the AMP device on the (i+1)-th available time unit is determined according to the following formula 10:

$$F^{(r+1)} = F^{(r)} + (-1)^{\text{init}} * (-1)^{S}\Delta F \qquad \text{(formula 10)}$$

If $F^{(r+1)}$ is a frequency domain resource available to the AMP device, then $F^{(i+1)} = F^{(r+1)}$.

If $F^{(r+1)}$ is a frequency domain resource not available to the AMP device, let r = r+1, and $F^{(r+1)}$ is calculated based on the updated r.

Here, $F^{(i+1)}$ represents the index of available frequency domain resource used by the AMP device on the (i+1)-th available time unit, $F^{(i)}$ represents the index of available frequency domain resource used by the AMP device on the i-th available time unit, the value of init is 0 or 1, and $\Delta F$ represents the frequency hopping interval.

Here, in the frequency domain resource set k associated with the AMP device in the deployment frequency band corresponding to the AMP device, the initialization value of S is 0, and when $F^{(i)} + (-1)^{\text{init}} * (-1)^{S}\Delta F < p_k$ or $F^{(i)} + (-1)^{\text{init}} * (-1)^{S}\Delta F > q_k$, S = S+1, and $F^{(i+1)}$ is calculated based on the updated S. Here, $p_k$ represents the minimum frequency domain resource index in the frequency domain resource set k associated with the AMP device, and $q_k$ represents the maximum frequency domain resource index in the frequency domain resource set k associated with the AMP device.

Here, $F^{(i)}$ and $F^{(i+1)}$ satisfy: $p_k \leq F^{(i)} \leq q_k$, and $p_k \leq F^{(i+1)} \leq q_k$.

It should be noted that a simple modification may be made to the above formula 10, and the modified formula also falls within the scope of protection of the present disclosure.

Specifically, in practical applications, all frequency domain resources (for example, channels) in the deployment frequency band may not be allocated to one AMP device. That is, the frequency domain resources that may be used by the AMP device are only a part of the entire system resource. When the frequency domain resource determined based on the above formula 10 is not available, the subsequent frequency domain resources are iteratively selected based on the formula 10 until an available frequency domain resource is selected.

In some embodiments, in the above formulas 7 to 10, when S = S+1 and there are multiple preset frequency hopping intervals, the AMP device selects frequency hopping intervals from the multiple preset frequency hopping intervals based on a preset order. Alternatively, the preset order adopts the same configuration manner as the multiple preset frequency hopping intervals, for example, both are stipulated parameters in the protocol or both are network configuration parameters.

Specifically, for example, the preset order may be an ascending order of frequency hopping intervals, or the preset order may be a descending order of frequency hopping intervals, or the preset order may be an ascending order of the indexes of frequency hopping intervals, or the preset order may be a descending order of the indexes of frequency hopping intervals, or another order.

In some embodiments, when the number of frequency domain resources used by the AMP device for sending the reference signal on the same available time unit is multiple, the j-th frequency domain resource used by the AMP device on the (i+1)-th available time unit is determined based on at least one of the following: the j-th frequency domain resource used by the AMP device on the i-th available time unit, a frequency hopping interval associated with the j-th frequency domain resource, a total number of frequency domain resources in the deployment frequency band corresponding to the AMP device, the minimum frequency domain resource index in the deployment frequency band corresponding to the AMP device, or the maximum frequency domain resource index in the deployment frequency band corresponding to the AMP device.

Here, j is a positive integer.

In some embodiments, the multiple frequency domain resources used by the AMP device for sending the reference signal on the same available time unit are consecutive frequency domain resources, or the multiple frequency domain resources used by the AMP device for sending the reference signal on the same available time unit are non-consecutive frequency domain resources.

Specifically, the multiple frequency domain resources used for sending the reference signal on the same available time unit may be referred to as a binding frequency domain resource set.

In some embodiments, the frequency hopping interval associated with the j-th frequency domain resource is a fixed value. For example, the frequency hopping interval associated with the j-th frequency domain resource is fixed to be one or more frequency domain resources.

In some embodiments, the frequency hopping interval associated with the j-th frequency domain resource is cyclically selected, according to the second order, from multiple preset frequency hopping intervals. Alternatively, the second order is stipulated by the protocol, or the second order is configured by the network (which may be semi-statically configured, or dynamically configured).

Specifically, for example, four frequency hopping intervals (ΔF) are configured in advance: ΔF1, ΔF2, ΔF3, and ΔF4, that is, multiple preset frequency hopping intervals are ΔF1, ΔF2, ΔF3, and ΔF4. When frequency hopping is performed, the frequency hopping intervals associated with the j-th frequency domain resource are cyclically selected in the order of [ΔF1 = > ΔF2 = > ΔF3 = > ΔF4 = > ΔF1...].

In some embodiments, the frequency hopping interval associated with the j-th frequency domain resource is determined from multiple preset frequency hopping intervals based on the value of i. For example, it is assumed that the number of multiple preset frequency hopping intervals is L, and the used frequency hopping interval is determined according to the following formula: i mod L. Here, mod represents a modulo operation. For another example, when i mod L = y1, ΔF1 is selected, and when i mod L = y2, ΔF2 is selected. Here, y1 and y2 are used as examples, and there may be y3, y4, etc., which are not limited here. In addition, y1/y2, etc. may be a single value or a set of multiple values.

In some embodiments, the frequency hopping interval associated with the j-th frequency domain resource is determined from multiple preset frequency hopping intervals based on the index value of the j-th frequency domain resource used on the i-th available time unit. For example, it is assumed that the number of multiple preset frequency hopping intervals is L. The used frequency hopping interval is determined according to the following formula: y mod L. Here, y is the index value of the frequency domain resource used on the i-th available time unit, and mod represents the modulo operation.

In some embodiments, the values of the multiple preset frequency hopping intervals have positive and/or negative values. For example, when there are multiple ΔFs, there may be "+" and "-" in the values, for example, +2 and - 2 may be taken as two different values.

In some embodiments, the frequency hopping interval may also be referred to as the interval between frequency domain resources (for example, channels) on two adjacent available time units.

In some embodiments, the j-th frequency domain resource used by the AMP device on the (i+1)-th available time unit is determined according to the following formula 11:

$$F^{(i+1)\_j} = (F^{(i)\_j} + \Delta F') \bmod M \qquad \text{(formula 11)}$$

Here, $F^{(i+1)\_j}$ represents the index of the j-th frequency domain resource used by the AMP device on the (i+1)-th available time unit, $F^{(i)\_j}$ represents the index of the j-th frequency domain resource used by the AMP device on the i-th available time unit, ΔF' represents the frequency hopping interval associated with the j-th frequency domain resource, and M represents the total number of frequency domain resources in the deployment frequency band corresponding to the AMP device.

It should be noted that a simple modification may be made to the above formula 11, and the modified formula also falls within the scope of protection of the present disclosure.

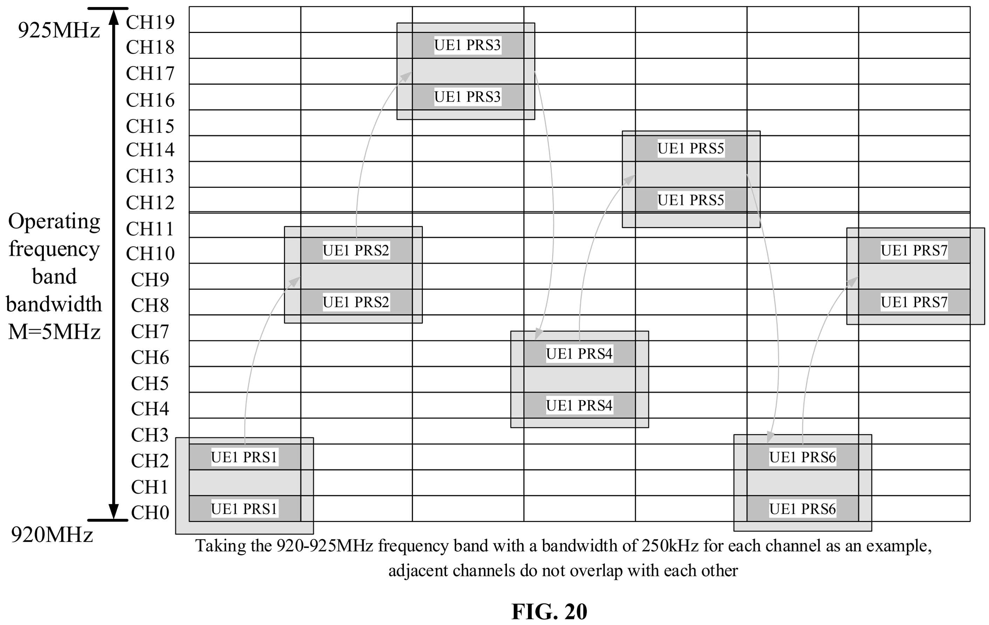

Specifically, for example, it is assumed that the frequency domain resource is a channel (CH), the deployment frequency band corresponding to the AMP device is 5MHz (920- 925MHz), and the system bandwidth of 5MHz (920 ~ 925MHz) is divided into 20 channels with a bandwidth of 250kHz, that is, M = 20. As illustrated in FIG. 20, the AMP device is UE1, and UE1 sends reference signal (which may be referred to as UE1 PRS1) on CH0 and CH2 on the first available time unit. The UE1 sends reference signal (which may be referred to as UE1 PRS2) on CH8 and CH10 on the second available time unit, the CH8 being obtained by substituting CH0 into the formula 11 and CH10 being obtained by substituting CH2 into the formula 11. The UE1 sends reference signal (which may be referred to as UE1 PRS3) on CH16 and CH18 on the third available time unit, the CH16 being obtained by substituting CH8 into the formula 11 and CH18 being obtained by substituting CH10 into the formula 11. The UE1 sends reference signal (which may be referred to as UE1 PRS4) on CH4 and CH6 on the fourth available time unit, CH4 being obtained by substituting CH16 into the formula 11 and CH6 being obtained by substituting CH18 into the formula 11. The UE1 sends reference signal (which may be referred to as UE1 PRS5) on CH12 and CH14 on the fifth available time unit, the CH12 being obtained by substituting CH 4 into the formula 11 and CH14 being obtained by substituting CH6 into the formula 11. The UE1 sends reference signal (which may be referred to as UE1 PRS6) on CH0 and CH2 on the sixth available time unit, CH0 being obtained by substituting CH12 into the formula 11 and CH2 being obtained by substituting CH14 into the formula 11. The UE1 sends reference signal (which may be referred to as UE1 PRS7) on CH8 and CH10 on the seventh available time unit, CH8 being obtained by substituting CH0 into the formula 11 and CH10 being obtained by substituting CH2 into the formula 11.

In some embodiments, the j-th frequency domain resource used by the AMP device on the (i+1)-th available time unit is determined according to the following formula 12:

$$F^{(i+1)\_j} = (F^{(i)\_j} + \Delta F') \bmod (q+1) + p \qquad \text{(formula 12)}$$

Here, $F^{(i+1)\_j}$ represents the index of the j-th frequency domain resource used by the AMP device on the (i+1)-th available time unit, $F^{(i)\_j}$ represents the index of the j-th frequency domain resource used by the AMP device on the i-th available time unit, $\Delta F'$ represents the frequency hopping interval associated with the j-th frequency domain resource, p represents the minimum frequency domain resource index in the deployment frequency band corresponding to the AMP device, and q represents the maximum frequency domain resource index in the deployment frequency band corresponding to the AMP device.

Here, $F^{(i)\_j}$ and $F^{(i+1)\_j}$ satisfy: $p \leq F^{(i)\_j} \leq q$ and $p \leq F^{(i+1)\_j} \leq q$.

In some embodiments, the j-th frequency domain resource used by the AMP device on the (i+1)-th available time unit is determined according to the following formula 13:

$$F^{(i+1)\_j} = (F^{(i)\_j} + \Delta F') \bmod (q_k+1) + p_k \qquad \text{(formula 13)}$$

Here, $F^{(i+1)\_j}$ represents the index of the j-th frequency domain resource used by the AMP device on the (i+1)-th available time unit, $F^{(i)\_j}$ represents the index of the j-th frequency domain resource used by the AMP device on the i-th available time unit, $\Delta F'$ represents the frequency hopping interval associated with the j-th frequency domain resource, $p_k$ represents the minimum frequency domain resource index in the frequency domain resource set k associated with the AMP device in the deployment frequency band corresponding to the AMP device, and $q_k$ represents the maximum frequency domain resource index in the frequency domain resource set k associated with the AMP device in the deployment frequency band corresponding to the AMP device.

Here, $F^{(i)\_j}$ and $F^{(i+1)\_j}$ satisfy: $p_k \leq F^{(i)\_j} \leq q_k$ and $p_k \leq F^{(i+1)\_j} \leq q_k$.

In some embodiments, the j-th frequency domain resource used by the AMP device on the (i+1)-th available time unit is determined according to the following formula 14:

$$F^{(i+1)\_j} = F^{(i)\_j} + (-1)^{\text{init}} * (-1)^{S} \Delta F' \qquad \text{(formula 14)}$$

Here, $F^{(i+1)\_j}$ represents the index of the j-th frequency domain resource used by the AMP device on the (i+1)-th available time unit, $F^{(i)\_j}$ represents the index of the j-th frequency domain resource used by the AMP device on the i-th available time unit, the value of init is 0 or 1, and $\Delta F'$ represents the frequency hopping interval associated with the j-th frequency domain resource.

Here, the initialization value of S is 0, and when $F^{(i)\_j} + (-1)^{\text{init}} * (-1)^{S} \Delta F' < p$ or $F^{(i)} + (-1)^{\text{init}} * (-1)^{S} \Delta F' > q$, S = S+1, and $F^{(i+1)\_j}$ is calculated based on the updated S. Here, p represents the minimum frequency domain resource index in the deployment frequency band corresponding to the AMP device, and q represents the maximum frequency domain resource index in the deployment frequency band corresponding to the AMP device.

Here, $F^{(i)\_j}$ and $F^{(i+1)\_j}$ satisfy: $p \leq F^{(i)\_j} \leq q$ and $p \leq F^{(i+1)\_j} \leq q$.

In some embodiments, the j-th frequency domain resource used by the AMP device on the (i+1)-th available time unit is determined according to the following formula 15:

$$F^{(i+1)\_j} = F^{(i)\_j} + (-1)^{\text{init}} * (-1)^{S} \Delta F' \qquad \text{(formula 15)}$$

Here, $F^{(i+1)\_j}$ represents the index of the j-th frequency domain resource used by the AMP device on the (i+1)-th available time unit, $F^{(i)\_j}$ represents the index of the j-th frequency domain resource used by the AMP device on the i-th available time unit, the value of init is 0 or 1, and $\Delta F'$ represents the frequency hopping interval associated with the j-th frequency domain resource.

Here, in the frequency domain resource set k associated with the AMP device in the deployment frequency band corresponding to the AMP device, the initialization value of S is 0. When $F^{(i)\_j} + (-1)^{\text{init}} * (-1)^{S} \Delta F' < p_k$ or $F^{(i)\_j} + (-1)^{\text{init}} * (-1)^{S} \Delta F' > q_k$, S = S+1, and $F^{(i+1)\_j}$ is calculated based on the updated S. Here, $p_k$ represents the minimum frequency domain resource index in the frequency domain resource set k associated with the AMP device, and $q_k$ represents the

maximum frequency domain resource index in the frequency domain resource set k associated with the AMP device.

Here, $F^{(i)}\_j$ and $F^{(i+1)}\_j$ satisfy: $p_k \leq F^{(i)}\_j \leq q_k$ and $p_k \leq F^{(i+1)}\_j \leq q_k$.

In some embodiments, in the above formulas 14 and 15, when S = S+1 and there are multiple preset frequency hopping intervals, the AMP device selects frequency hopping intervals from the multiple preset frequency hopping intervals based on a preset order. Alternatively, the preset order adopts the same configuration manner as the multiple preset frequency hopping intervals, for example, both are stipulated parameters in the protocol or both are network configuration parameters.

Specifically, for example, the preset order may be an ascending order of frequency hopping intervals, or the preset order may be a descending order of frequency hopping intervals, or the preset order may be an ascending order of the numbers of frequency hopping intervals, or the preset order may be a descending order of the numbers of frequency hopping intervals, or the preset order may be another order.

It should be noted that simple modifications may be made to the above formulas 11 to 15, and the modified formulas also fall within the scope of protection of the present disclosure.

In some embodiments, when the number of frequency domain resources used by the AMP device for sending the reference signal on the same available time unit is one, the available frequency domain resource used by the AMP device on the (i+1)-th available time unit is determined based on at least one of the following: an available frequency domain resource used by the AMP device on the i-th available time unit, a frequency hopping interval, a total number of frequency domain resources available by the AMP device in the deployment frequency band corresponding to the AMP device, the minimum relative index of frequency domain resources available to the AMP device in the deployment frequency band corresponding to the AMP device, or the maximum relative index of frequency domain resources available to the AMP device in the deployment frequency band corresponding to the AMP device.

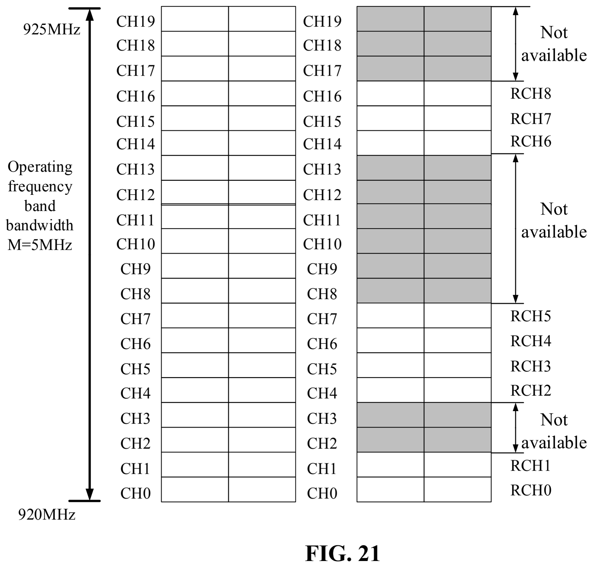

Specifically, in practical applications, all frequency domain resources (for example, channels) in the deployment frequency band may not be allocated to one AMP device. That is, the frequency domain resources that may be used by the AMP device are only a part of the entire system resource. A relative index of each available frequency domain resource (such as a Relative Channel (RCH)) may be obtained according to the frequency domain resources that may be actually used by the AMP device. Specifically, it is assumed that the frequency domain resource is a channel (CH), the deployment frequency band corresponding to the AMP device is 5 MHz (920-925 MHz), and the system bandwidth of 5 MHz (920-925 MHz) is divided into 20 channels with a bandwidth of 250 kHz. As illustrated in FIG. 21, CH2, CH3, CH8, CH9, CH10, CH11, CH12, CH13, CH17, CH18, and CH19 are channels that are not available to the AMP device. Based on the frequency domain resources that may be actually used by the AMP device (i.e., CH0, CH1, CH4, CH5, CH6, CH7, CH14, CH15, and CH16), the relative index of each available frequency domain resource (i.e. RCH0~RCH8) is obtained.

Specifically, the unit of the frequency hopping interval may be a frequency domain resource. Of course, the unit of the frequency hopping interval may be another frequency domain resource, which is not limited in the embodiments of the present disclosure.

In some embodiments, the frequency hopping interval is a fixed value, or the frequency hopping intervals are cyclically selected, according to the first order, from multiple preset frequency hopping intervals, or the frequency hopping interval is determined from multiple preset frequency hopping intervals based on a value of i, or the frequency hopping interval is determined from multiple preset frequency hopping intervals based on a relative index value of available frequency domain resource used on the i-th available time unit.

In some embodiments, the available frequency domain resource used by the AMP device on the (i+1)-th available time unit is determined according to the following formula 16.

$$F^{(i+1)} = (F^{(i)} + \Delta F) \bmod M' \qquad \text{(formula 16)}$$

$F^{(i+1)}$ represents a relative index of available frequency domain resource used by the AMP device on the (i+1)-th available time unit, $F^{(i)}$ represents a relative index of available frequency domain resource used by the AMP device on the i-th available time unit, $\Delta F$ represents the frequency hopping interval, and M' represents the total number of available frequency domain resources in the deployment frequency band corresponding to the AMP device.

In some embodiments, the available frequency domain resource used by the AMP device on the (i+1)-th available time unit is determined according to the following formula 17:

$$F^{(i+1)} = (F^{(i)} + \Delta F) \bmod (q'+1) + p' \qquad \text{(formula 17)}$$

Here, $F^{(i+1)}$ represents a relative index of available frequency domain resource used by the AMP device on the (i+1)-th available time unit, $F^{(i)}$ represents a relative index of available frequency domain resource used by the AMP device on the i-th available time unit, $\Delta F$ represents the frequency hopping interval, p' represents the minimum relative index of frequency domain resources available to the AMP device in the deployment frequency band corresponding to the AMP device, and q' represents the maximum relative index of frequency domain resources available to the AMP device in the deployment frequency band corresponding to the AMP device.

Here, $F^{(i)}$ and $F^{(i+1)}$ satisfy: $p' \leq F^{(i)} \leq q'$ and $p' \leq F^{(i+1)} \leq q'$.

In some embodiments, the available frequency domain resource used by the AMP device on the (i+1)-th available time unit is determined according to the following formula 18:

$$F^{(i+1)} = (F^{(i)} + \Delta F) \bmod (q_k'+1) + p_k' \qquad \text{(formula 18)}$$

Here, $F^{(i+1)}$ represents a relative index of available frequency domain resource used by the AMP device on the (i+1)-th available time unit, $F^{(i)}$ represents a relative index of available frequency domain resource used by the AMP device on the i-th available time unit, $\Delta F$ represents the frequency hopping interval, $p_k'$ represents the minimum relative index of available frequency domain resources in a frequency domain resource set k associated with the AMP device in a deployment frequency band corresponding to the AMP device, and $q_k'$ represents the maximum relative index of available frequency domain resources in a frequency domain resource set k associated with the AMP device.

Here, $F^{(i)}$ and $F^{(i+1)}$ satisfy: $p_k' \leq F^{(i)} \leq q_k'$, and $p_k' \leq F^{(i+1)} \leq q_k'$.

In some embodiments, the available frequency domain resource used by the AMP device on the (i+1)-th available time unit is determined according to the following formula 19:

$$F^{(i+1)} = F^{(i)} + (-1)^{\text{init}} * (-1)^{S}\Delta F \qquad \text{(formula 19)}$$

Here, $F^{(i+1)}$ represents a relative index of available frequency domain resource used by the AMP device on the (i+1)-th available time unit, $F^{(i)}$ represents a relative index of available frequency domain resource used by the AMP device on the i-th available time unit, the value of init is 0 or 1, and $\Delta F$ represents the frequency hopping interval.

The initialization value of S is 0. When $F^{(i)} + (-1)^{\text{init}} * (-1)^{S}\Delta F < p'$ or $F^{(i)} + (-1)^{\text{init}} * (-1)^{S}\Delta F > q'$, S = S+1, and $F^{(i+1)}$ is calculated based on the updated S. Here, p' represents the minimum relative index of the available frequency domain resources in the deployment frequency band corresponding to the AMP device, and q' represents the maximum relative index of the available frequency domain resources in the deployment frequency band corresponding to the AMP device.

Here, $F^{(i)}$ and $F^{(i+1)}$ satisfy: $p' \leq F^{(i)} \leq q'$, $p' \leq F^{(i+1)} \leq q'$.

In some embodiments, the available frequency domain resource used by the AMP device on the (i+1)-th available time unit is determined according to the following formula 20:

$$F^{(i+1)} = F^{(i)} + (-1)^{\text{init}} * (-1)^{S}\Delta F \qquad \text{(formula 20)}$$

Here, $F^{(i+1)}$ represents a relative index of available frequency domain resource used by the AMP device on the (i+1)-th available time unit, $F^{(i)}$ represents a relative index of available frequency domain resource used by the AMP device on the i-th available time unit, the value of init is 0 or 1, and $\Delta F$ represents the frequency hopping interval.

Here, in the frequency domain resource set k associated with the AMP device in the deployment frequency band corresponding to the AMP device, the initialization value of S is 0. When $F^{(i)} + (-1)^{\text{init}} * (-1)^{S}\Delta F < p_k'$ or $F^{(i)} + (-1)^{\text{init}} * (-1)^{S}\Delta F > q_k'$, S = S+1, and $F^{(i+1)}$ is calculated based on the updated S. Here, $p_k'$ represents the minimum relative index of available frequency domain resource in the frequency domain resource set k associated with the AMP device, and $q_k'$ represents the maximum relative index of available frequency domain resource in the frequency domain resource set k associated with the AMP device.

Here, $F^{(i)}$ and $F^{(i+1)}$ satisfy: $pk' \leq F^{(i)} \leq qk'$, and $pk' \leq F^{(i+1)} \leq qk'$.

In some embodiments, in the above formulas 16 and 20, when S = S+1 and there are multiple preset frequency hopping intervals, the AMP device selects frequency hopping intervals from the multiple preset frequency hopping intervals based on a preset order. Alternatively, the preset order adopts the same configuration manner as the multiple preset frequency hopping intervals, for example, both are stipulated parameters in the protocol or both are network configuration parameters.

Specifically, for example, the preset order may be an ascending order of frequency hopping intervals, or the preset order may be a descending order of frequency hopping intervals, or the preset order may be an ascending order of the numbers of frequency hopping intervals, or the preset order may be a descending order of the numbers of frequency hopping intervals, or the preset order may be another order.

It should be noted that simple modifications may be made to the above formulas 16 to 20, and the modified formulas also fall within the scope of protection of the present disclosure.

In some embodiments, the frequency domain resources available to the AMP device in the deployment frequency band corresponding to the AMP device are configured by the network, or the frequency domain resources available to the AMP device in the deployment frequency band corresponding to the AMP device are preempted by the network device and shared with the AMP device, or the frequency domain resources available to the AMP device in the deployment frequency band corresponding to the AMP device are preempted by the AMP device.

In some embodiments, in the above formulas 7 to 10, 14, 15, 19 and 20, the value of init (0 or 1) is randomly determined by the AMP device, or the value of init is configured by the network (configured dynamically/configured semi-statically), or the value of init is determined based on the position of the first frequency domain resource initially selected (for example, if the position of the first frequency domain resource is less than a threshold, then init = 0; otherwise, init = 1), or the value of init is determined based on the ID of the AMP device and/or the ID of the receiving end device.

In some embodiments, the frequency domain resource set k associated with the AMP device is a frequency domain resource set configured or indicated by the network among multiple frequency domain resource sets within a deployment frequency band corresponding to the AMP device.

In some embodiments, the frequency domain resource set k associated with the AMP device is determined, based on the ID of the AMP device and/or a group ID to which the AMP device belongs, from multiple frequency domain resource sets within a deployment frequency band corresponding to the AMP device. For example, it is assumed that the number of the multiple frequency domain resource sets is V. The frequency domain resource set k is determined based on the following formula: ID mod V or Group_ID mod V, and mod represents a modulo operation. For example, when ID mod V = z1, the first frequency domain resource set is selected, when ID mod V = z2, the second frequency domain resource set is selected, and so on. Here, z1 and z2 are used as examples, and there may be z3, z4, etc., which are not limited here. In addition, z1/z2, etc. may be a single value or a set of multiple values.

In some embodiments, the frequency domain resource set k associated with the AMP device is determined, based on the index of the first frequency domain resource initially selected by the AMP device, from multiple frequency domain resource sets within a deployment frequency band corresponding to the AMP device. For example, if the index of the first frequency domain resource initially selected by the AMP device is located in the frequency domain resource set 0, the frequency domain resource set associated with the AMP device is the frequency domain resource set 0. If the index of the first frequency domain resource initially selected by the AMP device is located in the frequency domain resource set 1, the frequency domain resource set associated with the AMP device is the frequency domain resource set 1, and so on.

In some embodiments, the first frequency domain resource initially selected by the AMP device is randomly selected, or the first frequency domain resource initially selected by the AMP device is configured by the network, or the first frequency domain resource initially selected by the AMP device is determined based on the ID of the AMP device and/or the ID of the peer device.

For example, there is an association relationship between the first frequency domain resource initially selected by the AMP device and the ID of the AMP device and/or the ID of the receiving end device. For example, the first frequency domain resource initially selected by the AMP device is determined based on the following formula: ID mod (q+1) + p. Here, p represents the minimum frequency domain resource index in the deployment frequency band corresponding to the AMP device, and q represents the maximum frequency domain resource index in the deployment frequency band corresponding to the AMP device.

In some embodiments, the multiple frequency domain resources are determined based on at least one frequency hopping pattern. Alternatively, the at least one frequency hopping pattern is stipulated by a protocol, or the at least one frequency hopping pattern is configured by a network (configured dynamically /configured semi-statically).

Specifically, for example, the network device may indicate the multiple frequency domain resources through a bitmap. For example, there are a total of 10 available frequency domain resources, and each bit corresponds to one available frequency domain resource. The AMP device performs frequency hopping on these frequency domain resources according to the preset rule, for example, from low to high or from high to low, or the network device configures/the AMP device determines the frequency domain resource that is used firstly, and then the frequency domain resources are cyclically used (for example, the network device instructs to use CH1/CH4/CH6/CH9/CH15, and the AMP device may determine to firstly use CH6, then frequency hopping is performed in the order of CH6 = > CH9 = > CH15 = > CH1 = > CH4).

Alternatively, the multiple frequency domain resources may be determined based on a combination of the frequency hopping patterns that are semi-statically configured, and the network device indicates the configured indexes of frequency hopping patterns.

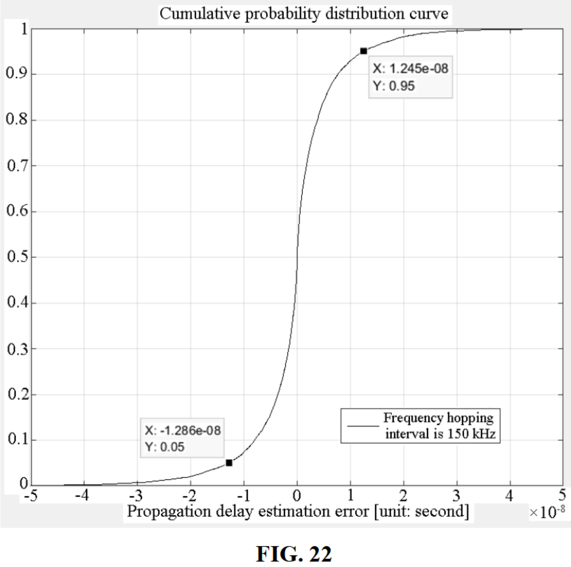

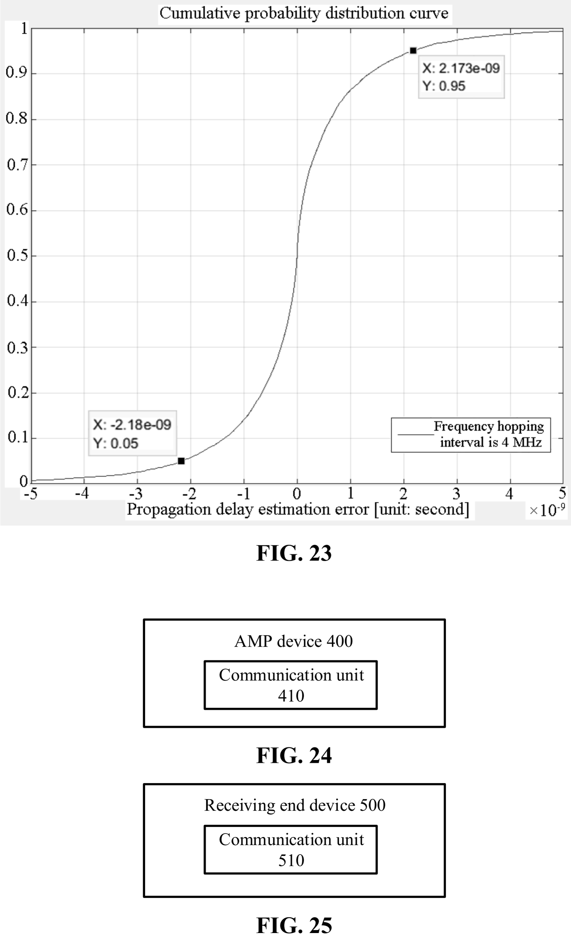

In order to verify the influence of frequency domain frequency hopping distance on the estimation performance of propagation time (for example, TOA)/propagation distance, the present disclosure takes frequency domain resources being channels as examples, TOA estimation is simulated under reference signals with different frequency hopping, and errors of the TOA estimation are statistically drawn to CDF curves illustrated in FIG. 22 and FIG. 23. The abscissa is the difference between the measured TOA and the actual TOA, and the ordinate is the cumulative probability value. In the example of FIG. 22, frequency hopping is performed within the channels at a frequency hopping distance of 40 subcarriers (150 kHz), which is very close to the existing PRACH channel bandwidth (48 subcarriers). It can be seen that in the solution of frequency hopping within channels, the estimation error of propagation time (TOA) is about 12ns (which corresponds to the values at 5% and 95%, and represents that the performance is better than 12ns for 90% of cases), and the corresponding distance error is 3.6 m. In the example of FIG. 23, frequency hopping is performed within the channels, the frequency hopping distance is 4 MHz, the estimation error of propagation time (TOA) is about 2.2 ns, and the corresponding distance error is 0.7 m. From the above simulation results, it can be seen that compared with the frequency hopping within channels with the less frequency hopping distance, the estimation performance of the TOA is significantly improved when the frequency hopping between channels with the greater frequency hopping distance is adopted, thereby verifying the advantages of the frequency hopping between channels in the technical solution of the present disclosure.

In summary, in the embodiments of the present disclosure, the AMP device may send reference signals on multiple frequency domain resources, and further, the receiving end device may perform positioning or ranging based on the reference signals sent on the multiple frequency domain resources.

In some implementations, the AMP device may send the reference signals on multiple frequency domain resources through frequency hopping.

In other implementations, the AMP device may simultaneously send the reference signals on multiple frequency domain resources.

In some implementations, each reference signal may include a frame header or a packet header for indicating occupancy time information of a frequency domain resource, and the like.

In other implementations, the frame header or packet header may be sent before the reference signal.

In some implementations, the reference signals may use OOK-based OFDM waveforms.

In other implementations, the reference signals may use FSK-based modulation. That is, different frequency points are used to represent different information.

In some implementations, the reference signals may be sent through active transmission or back scattering.

In some implementations, the frequency domain resources for sending the reference signals may be actively monitored and preempted by the AMP device, or may be preempted by other device (for example, the network device) and shared with the AMP device.

The method embodiments of the present disclosure are described in detail above with reference to FIG. 7 to FIG. 23. The apparatus embodiments of the present disclosure are described in detail below with reference to FIG. 24 to FIG. 28. It should be understood that the apparatus embodiments and the method embodiments correspond to each other, and similar descriptions may be made with reference to the method embodiments.

FIG. 24 illustrates a schematic block diagram of an AMP device 400 according to an embodiment of the present disclosure. As illustrated in FIG. 24, the AMP device 400 includes a communication unit 410.

The communication unit 410 is configured to send reference signals on multiple frequency domain resources. The reference signals sent on the multiple frequency domain resources are used to determine a position of the AMP device or a position of a receiving end device of the reference signals, and/or the reference signals sent on the multiple frequency domain resources are used to determine a distance between the AMP device and the receiving end device of the reference signals.

In some embodiments, the multiple frequency domain resources are one of following: channels, carriers, BWPs, PRB groups, and subcarrier groups.

In some embodiments, the AMP device alternately sends the reference signals on the multiple frequency domain resources through frequency hopping.

In some embodiments, the AMP device simultaneously sends the reference signals on the multiple frequency domain resources.

In some embodiments, the AMP device sends the reference signals on the multiple frequency domain resources based on the first frequency hopping pattern.

In some embodiments, the first frequency hopping pattern is used to indicate indexes of the multiple frequency domain resources, and the indexes of the multiple frequency domain resources represent frequency domain resources on which reference signals are sequentially hopped.

In some embodiments, the multiple frequency domain resources include all of M frequency domain resources, or the multiple frequency domain resources include a part of the M frequency domain resources.

In some embodiments, the M frequency domain resources are predefined, or configured by a network device.

In some embodiments, the first frequency hopping pattern is predefined, or configured by a network device, or determined by the AMP device, or determined based on a preset rule.

In some embodiments, the first frequency hopping pattern is determined based on a sequence.

In some embodiments, the AMP device and other AMP devices use different frequency domain resources to send reference signals at the same time.

In some embodiments, each of the reference signals includes a frame header, the frame header is sent before sending the reference signal, and the frame header carries time length information of a frequency domain resource occupied by the reference signal.

In some embodiments, the frame header further carries at least one of: information for identifying the AMP device; information for identifying the receiving end device of the reference signal; information for synchronizing the AMP device and the receiving end device of the reference signal; or configuration information of the reference signal.

In some embodiments, the information for synchronizing the AMP device and the receiving end device of the reference signal includes a synchronization sequence or a pilot sequence.

In some embodiments, the configuration information of the reference signal includes at least one of: a starting position at which the reference signal is actually sent, a transmission duration of the reference signal, subcarrier(s) actually occupied by the reference signal, or a modulation symbol of the reference signal on each occupied subcarrier.

In some embodiments, each of the reference signals uses an OOK-based OFDM waveform.

In some embodiments, the reference signal is sent on target subcarrier(s) in a frequency domain resource, and the target subcarrier(s) includes one or more subcarriers.

In some embodiments, the target subcarrier(s) is predefined, or configured by a network device.

In some embodiments, a value of a modulation symbol on each of the target subcarrier(s) is predefined, or is configured by a network device.

In some embodiments, the multiple frequency domain resources are preempted by the AMP device.

In some embodiments, the multiple frequency domain resources are allocated by a network device for the AMP, or the multiple frequency domain resources are preempted by the network device for the AMP device.

In some embodiments, the reference signals are sent by the AMP device in an active transmission manner.

In some embodiments, the reference signals are sent by the AMP device in a back scattering manner.

Alternatively, in some embodiments, the above communication unit may be a communication interface or a transceiver, or an input/output interface of a communication chip or a system-on-chip.

It should be understood that the AMP device 400 according to the embodiment of the present disclosure may correspond to the AMP device in the embodiment of the method of the present disclosure, and the above and other operations and/or functions of respective units in the AMP device 400 are used for implementing the corresponding flows of the AMP device in the methods illustrated in FIG. 7 to FIG. 23, which are not described repeatedly herein for the sake of conciseness.

FIG. 25 illustrates a schematic block diagram of a receiving end device 500 according to an embodiment of the present disclosure. As illustrated in FIG. 25, the receiving end device 500 includes a communication unit 510.

The communication unit 510 is configured to receive reference signals sent by an AMP device on multiple frequency domain resources. The reference signals sent on the multiple frequency domain resources are used to determine a position of the AMP device or the receiving end device, and/or a position of the reference signals sent on the multiple frequency domain resources are used to determine a distance between the AMP device and the receiving end device.

In some embodiments, the multiple frequency domain resources are one of following: channels, carriers, BWPs, PRB groups, and subcarrier groups.

In some embodiments, the reference signals are alternately sent by the AMP device on the multiple frequency domain resources through frequency hopping.

In some embodiments, the reference signals are simultaneously sent by the AMP device on the multiple frequency domain resources.

In some embodiments, the reference signals are sent by the AMP device on the multiple frequency domain resources based on the first frequency hopping pattern.

In some embodiments, the first frequency hopping pattern is used to indicate indexes of the multiple frequency domain resources, and the indexes of the multiple frequency domain resources represent frequency domain resources on which reference signals are sequentially hopped.

In some embodiments, the multiple frequency domain resources include all of M frequency domain resources, or the multiple frequency domain resources include a part of the M frequency domain resources.

In some embodiments, the M frequency domain resources are predefined, or configured by a network device.

In some embodiments, the first frequency hopping pattern is predefined, or configured by a network device, or determined by the AMP device, or determined based on a preset rule.

In some embodiments, the first frequency hopping pattern is determined based on a sequence.

In some embodiments, the AMP device and other AMP devices use different frequency domain resources to send reference signals at the same time.

In some embodiments, each of the reference signals includes a frame header, the frame header is sent before sending the reference signal, and the frame header carries time length information of a frequency domain resource occupied by the reference signal.

In some embodiments, the frame header further carries at least one of: information for identifying the AMP device; information for identifying the receiving end device of the reference signal; information for synchronizing the AMP device and the receiving end device of the reference signal; or configuration information of the reference signal.

In some embodiments, the information for synchronizing the AMP device and the receiving end device of the reference signal includes a synchronization sequence or a pilot sequence.

In some embodiments, the configuration information of the reference signals includes at least one of: a starting position at which the reference signal is actually sent, a transmission duration of the reference signal, subcarrier(s) actually occupied by the reference signal, or a modulation symbol of the reference signal on each occupied subcarrier.

In some embodiments, each of the reference signals uses an OOK-based OFDM waveform.

In some embodiments, the reference signal is sent on target subcarrier(s) in a frequency domain resource, and the target subcarrier(s) includes one or more subcarriers.

In some embodiments, the target subcarrier(s) is predefined, or is configured by a network device.

In some embodiments, a value of a modulation symbol on each target subcarrier is predefined, or configured by a network device.

In some embodiments, the multiple frequency domain resources are preempted by the AMP device.

In some embodiments, the multiple frequency domain resources are allocated by a network device for the AMP, or the multiple frequency domain resources are preempted by the network device for the AMP device.

In some embodiments, the reference signals are sent by the AMP device in an active transmission manner.

In some embodiments, the reference signals are sent by the AMP device in a back scattering manner.

In some embodiments, the receiving end device further includes a processing unit.

The processing unit is configured to determine phases or phase difference(s) of the reference signals sent on the multiple frequency domain resources; and determine a propagation time or distance between the AMP device and the receiving end device according to the phases or the phase difference(s) of the reference signals sent on the multiple frequency domain resources and frequency domain information corresponding to the phases or the phase difference(s) of the reference signals.

In some embodiments, the propagation time or distance is used to determine the position of the AMP device or the receiving end device.

Alternatively, in some embodiments, the above communication unit may be a communication interface or a transceiver, or an input/output interface of a communication chip or a system-on-chip. The above processing unit may be one or more processors.

It should be understood that the receiving end device 500 according to the embodiment of the present disclosure may correspond to the receiving end device in the embodiment of the method of the present disclosure. The above and other operations and/or functions of respective units in the receiving end device 500 are used for implementing the corresponding flows of the receiving end device in the methods illustrated in FIG. 7 to FIG. 23, which will not described repeatedly herein for the sake of conciseness.

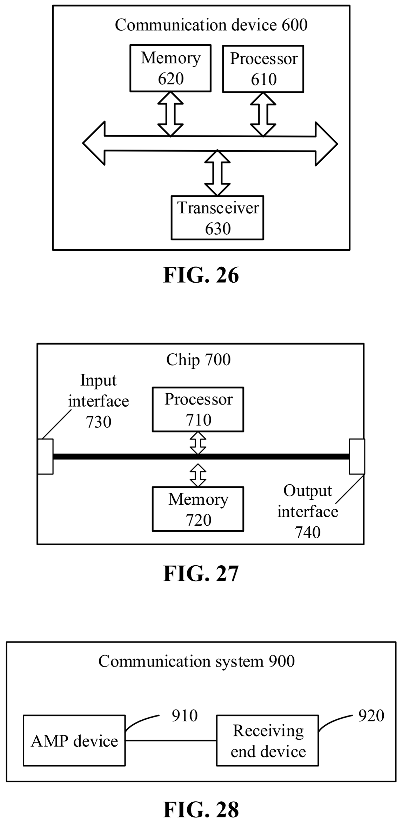

FIG. 26 is a schematic structural diagram of a communication device 600 according to an embodiment of the present disclosure. The communication device 600 illustrated in FIG. 26 includes a processor 610. The processor may invoke and execute a computer program from a memory to implement the methods in the embodiments of the present disclosure.

Alternatively, as illustrated in FIG. 26, the communication device 600 may further include a memory 620. Here, the processor 610 may invoke and execute a computer program from the memory 620 to implement the methods in the embodiments of the present disclosure.

The memory 620 may be a separate device independent of the processor 610 or may be integrated in the processor 610.

Alternatively, as illustrated in FIG. 26, the communication device 600 may further include a transceiver 630. The processor 610 may control the transceiver 630 to communicate with other devices. Specifically, The processor 610 may control the transceiver 630 t send information or data to other devices, or receive information or data sent by other devices.

The transceiver 630 may include a transmitter and a receiver. The transceiver 630 may further include one or more antennas.

Alternatively, the communication device 600 may specifically be a receiving end device according to the embodiment of the present disclosure, and the communication device 600 may implement corresponding processes implemented by the receiving end device in respective methods according to the embodiments of the present disclosure, which will not be described repeatedly herein for the sake of conciseness.

Alternatively, the communication device 600 may be an AMP device according to the embodiment of the present disclosure, and the communication device 600 may implement corresponding processes implemented by the AMP device in respective methods according to the embodiments of the present disclosure, which will not be described repeatedly herein for the sake of conciseness.

FIG. 27 is a schematic structural diagram of a chip according to an embodiment of the present disclosure. The chip 700 illustrated in FIG. 27 includes a processor 710. The processor may invoke and execute a computer program from a memory to implement the methods in the embodiments of the present disclosure.

Alternatively, as illustrated in FIG. 27, the chip 700 may further include a memory 720. Here, the processor 710 may invoke and execute a computer program from the memory 720 to implement the methods in the embodiments of the present disclosure.

The memory 720 may be a separate device independent of the processor 710 or may be integrated in the processor 710.

Alternatively, the chip 700 may further include an input interface 730. The processor 710 may control the input interface 730 to communicate with other devices or chips, specifically, may acquire information or data sent by other devices or chips.

Alternatively, the chip 700 may further include an output interface 740. The processor 710 may control the output interface 740 to communicate with other devices or chips, specifically, may output information or data to other devices or chips.

Alternatively, the chip may be applied to the receiving end device in the embodiments of the present disclosure, and the chip may implement the corresponding processes implemented by the receiving end device in respective methods of the embodiments of the present disclosure, which are not described repeatedly herein for the sake of conciseness.

Alternatively, the chip may be applied to the AMP device in the embodiments of the present disclosure, and the chip may implement the corresponding processes implemented by the AMP device in respective methods of the embodiments of the present disclosure, which are not described repeatedly herein for the sake of conciseness.

It should be understood that the chip mentioned in the embodiments of the present disclosure may also be referred to as a system level chip, a system chip, a chip system, or a system-on-chip.

FIG. 28 is a schematic block diagram of a communication system 900 according to an embodiment of the present disclosure. As illustrated in FIG. 28, the communication system 900 includes an AMP device 910 and a receiving end device 920.

Here, the AMP device 910 may be used to implement the corresponding functions implemented by the AMP device in the above methods, and the receiving end device 920 may be used to implement the corresponding functions implemented by the receiving end device in the above methods, which are not described repeatedly herein for the sake of conciseness.

It should be understood that the processor of the embodiment of the present disclosure may be an integrated circuit chip having signal processing capabilities. In the implementation process, the operations of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, operations, and logical block diagrams disclosed in the embodiments of the present disclosure may be implemented or executed. The general-purpose processor may be a microprocessor or the processor may be any conventional processor or the like. The steps of the method disclosed in connection with the embodiments of the present disclosure may be directly embodied as execution by the hardware decoding processor, or may be executed by combining hardware and software modules in the decoding processor. The software module may be located in a storage medium mature in the art, such as random access memory, flash memory, read-only memory, programmable read-only memory, or electrically erasable programmable memory, registers, etc. The storage medium is located in the memory, and the processor reads the information in the memory, and combines its hardware to complete the operations of the above method.

It is understood that the memory in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not by way of limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memory.

It should be understood that the above memory is illustrative but not limiting, for example, the memory in the embodiments of the present disclosure may also be a SRAM, a DRAM, a SDRAM, a DDR SDRAM, an ESDRAM, a SLDRAM, a DR RAM, and the like. That is, the memory in the embodiments of the present disclosure is intended to include, but is not limited to, these and any other suitable type of memory.

Embodiments of the present disclosure further provide a computer readable storage medium for storing a computer program.

Alternatively, the computer readable storage medium may be applied to the AMP device in the embodiments of the present disclosure, and the computer program causes the computer to execute the corresponding flows implemented by the AMP device in respective methods in the embodiments of the present disclosure, which are not described repeatedly herein for the sake of conciseness.

Alternatively, the computer readable storage medium may be applied to the receiving end device in the embodiments of the present disclosure, and the computer program causes the computer to execute the corresponding flows implemented by the receiving end device in respective methods of the embodiments of the present disclosure, which are not described repeatedly herein for the sake of conciseness.

Embodiments of the present disclosure further provide a computer program product including computer program instructions.

Alternatively, the computer program product may be applied to the receiving end device in the embodiments of the present disclosure, and the computer program instruction causes the computer to execute the corresponding flows implemented by the receiving end device in respective methods in the embodiments of the present disclosure, which are not described repeatedly herein for the sake of conciseness.

Alternatively, the computer program product may be applied to the AMP device in the embodiments of the present disclosure, and the computer program instruction causes the computer to execute the corresponding flows implemented by the AMP device in respective methods of the embodiments of the present disclosure, which are not described repeatedly herein for the sake of conciseness.

Embodiments of the present disclosure further provide a computer program.

Alternatively, the computer program may be applied to the receiving end device in the embodiments of the present disclosure, and when the computer program is executed on the computer, the computer executes the corresponding processes implemented by the receiving end device in respective methods in the embodiments of the present disclosure, which are not described repeatedly herein for the sake of conciseness.

Alternatively, the computer program may be applied to the AMP device in the embodiments of the present disclosure, and when the computer program is executed on the computer, the computer executes the corresponding processes implemented by the AMP device in respective methods of the embodiments of the present disclosure, which are not described repeatedly herein for the sake of conciseness.

Those of ordinary skill in the art will appreciate that the elements and algorithmic steps of the various examples described in connection with the embodiments disclosed herein may be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

Those skilled in the art can clearly understand that for convenience and conciseness of the description, the specific working processes of the systems, apparatus, and units described above may refer to the corresponding processes in the aforementioned method embodiments, which will not be described herein for the sake of conciseness.

In several embodiments provided herein, it should be understood that the disclosed systems, apparatus, and methods may be implemented in other ways. For example, the apparatus embodiment described above is merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, apparatus or unit, which may be electrical, mechanical or otherwise.

The units described as separate units may or may not be physically separate, and the units displayed as units may or may not be physical units, that is, they may be located in one place or may be distributed over multiple network units. Some or all of the units may be selected according to actual needs to achieve the purpose of the solutions of the present embodiment.

In addition, various functional units in various embodiments of the present disclosure may be integrated in one processing unit, each unit may be physically present alone, or two or more units may be integrated in one unit.

The functions may be stored in a computer readable storage medium if implemented in the form of software functional units and sold or used as independent products. Based on this understanding, the technical solution of the present disclosure essentially or a part that contributes to the prior art or a part of the technical solution may be embodied in the form of a software product, which is stored in a storage medium and includes several instructions for causing a computer device (which may be a personal computer, a server, or a network device, etc.) to perform all or part of the operations of the method described in various embodiments of the present disclosure. The storage medium includes a USB disk, a removable hard disk, a Read-Only Memory (ROM), a Random Access Memory (RAM), a magnetic disk, or an optical disk that can store a program code.

The above is merely specific embodiments of the present disclosure, but the scope of protection of the present disclosure is not limited thereto, and any person skilled in the art may easily think of changes or substitutions within the technical scope disclosed in the present disclosure, which should be covered within the scope of protection of the present disclosure. Therefore, the scope of protection of the present disclosure should be based on the scope of protection of the claims.

**Claims**

1. A method for wireless communication, comprising:
   sending, by an ambient power (AMP) device, reference signals on a plurality of frequency domain resources, wherein the reference signals sent on the plurality of frequency domain resources are used to determine a position of the AMP device or a position of a receiving end device of the reference signals, and/or the reference signals sent on the plurality of frequency domain resources are used to determine a distance between the AMP device and the receiving end device of the reference signals.

2. The method of claim 1, wherein the plurality of frequency domain resources are one of following:
   channels, carriers, band width parts (BWPs), physical resource block (PRB) groups, and subcarrier groups.

3. The method of claim 1 or 2, wherein the AMP device alternately sends reference signals on the plurality of frequency domain resources through frequency hopping.

4. The method of claim 1 or 2, wherein the AMP device simultaneously sends reference signals on the plurality of frequency domain resources.

5. The method of any one of claims 1 to 4, wherein the AMP device sends reference signals on a plurality of frequency domain resources based on a first frequency hopping pattern.

6. The method of claim 5, wherein the first frequency hopping pattern is used to indicate indexes of a plurality of frequency domain resources, and the indexes of the plurality of frequency domain resources represent frequency domain resources on which reference signals are sequentially hopped.

7. The method of claim 6, wherein the plurality of frequency domain resources comprise all of M frequency domain resources, or the plurality of frequency domain resources comprise a part of the M frequency domain resources.

8. The method of claim 7, wherein the M frequency domain resources are predefined, or configured by a network device.

9. The method of any one of claims 5 to 8, wherein the first frequency hopping pattern is predefined, or configured by a network device, or determined by the AMP device, or determined based on a preset rule.

10. The method of claim 9, wherein the first frequency hopping pattern is determined based on a sequence.

11. The method of any one of claims 1 to 10, wherein the AMP device and other AMP devices use different frequency domain resources to send reference signals at a same time.

12. The method of any one of claims 1 to 11, wherein each of the reference signals comprises a frame header, the frame header is sent before sending the reference signal, and the frame header carries time length information of a frequency domain resource occupied by the reference signal.

13. The method of claim 12, wherein the frame header further carries at least one of:

    information for identifying the AMP device;
    information for identifying the receiving end device of the reference signal;
    information for synchronizing the AMP device and the receiving end device of the reference signal; or
    configuration information of the reference signal.

14. The method of claim 13, wherein the information for synchronizing the AMP device and the receiving end device of the reference signal comprises a synchronization sequence or a pilot sequence.

15. The method of claim 13 or 14, wherein the configuration information of the reference signal comprises at least one of:
    a starting position at which the reference signal is actually sent, a transmission duration of the reference signal, subcarrier(s) actually occupied by the reference signal, or a modulation symbol of the reference signal on each occupied subcarrier.

16. The method of any one of claims 1 to 15, wherein each of the reference signals uses an on off keying (OOK)-based orthogonal frequency division multiplexing (OFDM) (OOK-based OFDM) waveform.

17. The method of claim 16, wherein the reference signal is sent on target subcarrier(s) in a frequency domain resource, and the target subcarrier(s) comprises one or more subcarriers.

18. The method of claim 17, wherein the target subcarrier(s) is predefined, or configured by a network device.

19. The method of claim 17 or 18, wherein a value of a modulation symbol on each of the target subcarrier(s) is predefined, or is configured by a network device.

20. The method of any one of claims 1 to 19, wherein the plurality of frequency domain resources are preempted by the AMP device.

21. The method of any one of claims 1 to 19, wherein the plurality of frequency domain resources are allocated by a network device for the AMP, or the plurality of frequency domain resources are preempted by the network device for the AMP device.

22. The method of any one of claims 1 to 21, wherein the reference signals are sent by the AMP device in an active transmission manner.

23. The method of any one of claims 1 to 21, wherein the reference signals are sent by the AMP device in a back scattering manner.

24. A method for wireless communication, comprising:
receiving, by a receiving end device, reference signals sent by an ambient power (AMP) device on a plurality of frequency domain resources, wherein the reference signals sent on the plurality of frequency domain resources are used to determine a position of the AMP device or a position of the receiving end device, and/or the reference signals sent on the plurality of frequency domain resources are used to determine a distance between the AMP device and the receiving end device.

25. The method of claim 24, wherein the plurality of frequency domain resources are one of following:
channels, carriers, band width parts (BWPs), physical resource block (PRB) groups, and subcarrier groups.

26. The method of claim 24 or 25, wherein reference signals are alternately sent by the AMP device on the plurality of frequency domain resources through frequency hopping.

27. The method of claim 24 or 25, wherein reference signals are simultaneously sent by the AMP device on the plurality of frequency domain resources.

28. The method of any one of claims 24 to 27, wherein reference signals are sent by the AMP device on a plurality of frequency domain resources based on a first frequency hopping pattern.

29. The method of claim 28, wherein the first frequency hopping pattern is used to indicate indexes of a plurality of frequency domain resources, and the indexes of the plurality of frequency domain resources represent frequency domain resources on which reference signals are sequentially.

30. The method of claim 29, wherein the plurality of frequency domain resources comprise all of M frequency domain resources, or the plurality of frequency domain resources comprise a part of the M frequency domain resources.

31. The method of claim 30, wherein the M frequency domain resources are predefined, or configured by a network device.

32. The method of any one of claims 28 to 31, wherein the first frequency hopping pattern is predefined, or configured by a network device, or determined by the AMP device, or determined based on a preset rule.

33. The method of claim 32, wherein the first frequency hopping pattern is determined based on a sequence.

34. The method of any one of claims 24 to 33, wherein the AMP device and other AMP devices use different frequency domain resources to send reference signals at a same time.

35. The method of any one of claims 24 to 34, wherein each of the reference signals comprises a frame header, the frame header is sent before sending the reference signal, and the frame header carries time length information of a frequency domain resource occupied by the reference signal.

36. The method of claim 35, wherein the frame header further carries at least one of:

information for identifying the AMP device;
information for identifying the receiving end device of the reference signal;
information for synchronizing the AMP device and the receiving end device of the reference signal; or
configuration information of the reference signal.

37. The method of claim 36, wherein the information for synchronizing the AMP device and the receiving end device of the reference signal comprises a synchronization sequence or a pilot sequence.

38. The method of claim 36 or 37, wherein the configuration information of the reference signals comprises at least one of: a starting position at which the reference signal is actually sent, a transmission duration of the reference signal, subcarrier(s) actually occupied by the reference signal, or a modulation symbol of the reference signal on each occupied subcarrier.

39. The method of any one of claims 24 to 38, wherein each of the reference signals uses an on off keying (OOK)-based orthogonal frequency division multiplexing (OFDM) (OOK-based OFDM) waveform.

40. The method of claim 39, wherein the reference signal is sent on target subcarrier(s) in a frequency domain resource, and the target subcarrier(s) comprises one or more subcarriers.

41. The method of claim 40, wherein the target subcarrier(s) is predefined, or configured by a network device.

42. The method of claim 40 or 41, wherein a value of a modulation symbol on each of the target subcarrier(s) is predefined, or is configured by a network device.

43. The method of any one of claims 24 to 42, wherein the plurality of frequency domain resources are preempted by the AMP device.

44. The method of any one of claims 24 to 42, wherein the plurality of frequency domain resources are allocated by a network device for the AMP, or the plurality of frequency domain resources are preempted by the network device for the AMP device.

45. The method of any one of claims 24 to 44, wherein the reference signals are sent by the AMP device in an active transmission manner.

46. The method of any one of claims 24 to 44, wherein the reference signals are sent by the AMP device in a back scattering manner.

47. The method of any one of claims 24 to 46, further comprising:

determining, by the receiving end device, phases or phase difference(s) of the reference signals sent on the plurality of frequency domain resources; and
determining a propagation time or distance between the AMP device and the receiving end device according to the phases or the phase difference(s) of the reference signals sent on the plurality of frequency domain resources and frequency domain information corresponding to the phases or the phase difference(s) of the reference signals.

48. The method of claim 47, wherein the propagation time or distance is used to determine the position of the AMP device or the receiving end device.

49. An ambient power (AMP) device, comprising:

a communication unit, configured to send reference signals on a plurality of frequency domain resources, wherein the reference signals sent on the plurality of frequency domain resources are used to determine a position of the AMP device or a position of a receiving end device of the reference signals, and/or the reference signals sent on the plurality of frequency domain resources are used to determine a distance between the AMP device and the receiving end device of the reference signals.

50. A receiving end device, comprising:
a communication unit, configured to receive reference signals sent by an ambient power (AMP) device on a plurality of frequency domain resources, wherein the reference signals sent on the plurality of frequency domain resources are used to determine a position of the AMP device or a position of the receiving end device, and/or the reference signals sent on the plurality of frequency domain resources are used to determine a distance between the AMP device and the receiving end device.

51. An ambient power (AMP) device, comprising: a processor and a memory, wherein the memory is configured to store a computer program, and the processor is configured to invoke and execute the computer program stored in the memory to perform the method of any one of claims 1 to 23.

52. A receiving end device, comprising: a processor and a memory, wherein the memory is configured to store a computer program, and the processor is configured to invoke and execute the computer program stored in the memory to perform the method of any one of claims 24 to 48.

53. A chip, comprising a processor, wherein the processor is configured to invoke and execute a computer program from a memory to cause a device on which the chip is mounted to perform the method of any one of claims 1 to 23, or the method of any one of claims 24 to 48.

54. A computer readable storage medium for storing a computer program that causes a computer to perform the method of any one of claims 1 to 23 or the method of any one of claims 24 to 48.

55. A computer program product, comprising computer program instructions that cause a computer to perform the method of any one of claims 1 to 23, or the method of any one of claims 24 to 48.

56. A computer program, causing a computer to perform the method of any one of claims 1 to 23, or the method of any one of claims 24 to 48.

**100**

110

120 120

FIG. 1

FIG. 2

**FIG. 3**

**FIG. 4**

**FIG. 5**

FIG. 6

200

| AMP device | | Receiving end device |

S210, Send reference signals on
multiple frequency domain resources

**FIG. 7**

Reference signal

| Frame header or packet header | |

Channel#1

t1

Reference signal

| Frame header or packet header | |

Channel#2

t3

Reference signal

| Frame header or packet header | |

Channel#3

t2

Reference signal

| Frame header or packet header | |

Channel#4

t4

**FIG. 8**

EP 4 701 238 A1

**FIG. 9**

PRS

Channel#1

t1

PRS

Channel#2

t3

PRS

Channel#3

t2

PRS

Channel#4

t4

**FIG. 10**

TxOP

PRS

Channel#1

t1

PRS

Channel#2

t3

PRS

Channel#3

t2

PRS

Channel#4

t4

**FIG. 11**

PRS TxOP

Channel#1

t1

TxOP PRS

Channel#2

t3

PRS TxOP

Channel#3

t2

TxOP PRS

Channel#4

t4

**FIG. 12**

| | PRS | TxOP | | Channel#1 |

t1

| | | PRS | TxOP | | Channel#2 |

t2

| | | Channel#3 |

| | TxOP | PRS | | Channel#4 |

t3

## FIG. 13A

| | PRS | TxOP | | Channel#1 |

t1

| | TxOP | PRS | | Channel#2 |

t3

| | PRS | | Channel#3 |

t2

| | TxOP | PRS | | Channel#4 |

t4

## FIG. 13B

| | PRS | TxOP | PRS | | Channel#1 |

t1                              t3

| | Channel#2 |

| | Channel#3 |

| | PRS | TxOP | PRS | | Channel#4 |

t2                              t4

## FIG. 14A

**FIG. 14B**

Taking the 920-925MHz frequency band with a bandwidth of 250kHz for each channel as an example, adjacent channels do not overlap with each other

**FIG. 15**

Taking the 920-925MHz frequency band with a bandwidth of 250kHz for each channel as an example, adjacent channels do not overlap with each other

**FIG. 16**

Taking the 920-925MHz frequency band with a bandwidth of 250kHz for each channel as an example, adjacent channels do not overlap with each other

**FIG. 17**

EP 4 701 238 A1

Taking the 920-925MHz frequency band with a bandwidth of 250kHz for each channel as an example, adjacent channels do not overlap with each other

**FIG. 18**

EP 4 701 238 A1

Taking the 920-925MHz frequency band with a bandwidth of 250kHz for each channel as an example, adjacent channels do not overlap with each other

**FIG. 19**

Taking the 920-925MHz frequency band with a bandwidth of 250kHz for each channel as an example, adjacent channels do not overlap with each other

**FIG. 20**

EP 4 701 238 A1

925MHz

Operating
frequency
band
bandwidth
M=5MHz

920MHz

| | CH19 | | | CH19 | | | Not available |
| | CH18 | | | CH18 | | | |
| | CH17 | | | CH17 | | | |
| | CH16 | | | CH16 | | | RCH8 |
| | CH15 | | | CH15 | | | RCH7 |
| | CH14 | | | CH14 | | | RCH6 |
| | CH13 | | | CH13 | | | Not available |
| | CH12 | | | CH12 | | | |
| | CH11 | | | CH11 | | | |
| | CH10 | | | CH10 | | | |
| | CH9 | | | CH9 | | | |
| | CH8 | | | CH8 | | | |
| | CH7 | | | CH7 | | | RCH5 |
| | CH6 | | | CH6 | | | RCH4 |
| | CH5 | | | CH5 | | | RCH3 |
| | CH4 | | | CH4 | | | RCH2 |
| | CH3 | | | CH3 | | | Not available |
| | CH2 | | | CH2 | | | |
| | CH1 | | | CH1 | | | RCH1 |
| | CH0 | | | CH0 | | | RCH0 |

**FIG. 21**

54

**FIG. 22**

**FIG. 23**

**FIG. 24**

**FIG. 25**

Communication device 600

Memory 620

Processor 610

Transceiver 630

**FIG. 26**

Chip 700

Input interface 730

Processor 710

Memory 720

Output interface 740

**FIG. 27**

Communication system 900

AMP device 910

Receiving end device 920

**FIG. 28**

**INTERNATIONAL SEARCH REPORT**

| International application No. |
|---|
| **PCT/CN2023/088789** |

| A. | CLASSIFICATION OF SUBJECT MATTER |
|---|---|

H04W4/02(2018.01)i

According to International Patent Classification (IPC) or to both national classification and IPC

| B. | FIELDS SEARCHED |
|---|---|

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT: WPABSC; ENTXTC; WPABS; ENTXT; VEN; CJFD; 3GPP: 环境能, 零功耗, 无源, 定位, 位置, 测距, 距离, 频域, 资源, 参考信号, AMP, ambient power, zero power consumption, passive, position, location, distance, frequency domain, resource, reference signal, PRS

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109765547 A (CHONGQING GUGENG TECHNOLOGY CO., LTD.) 17 May 2019 (2019-05-17) description, paragraphs [0004]-[0015] | 1-56 |
| A | CN 106664518 A (INTEL CORP.) 10 May 2017 (2017-05-10) entire document | 1-56 |
| A | WO 2023281079 A1 (FRAUNHOFER GES FORSCHUNG) 12 January 2023 (2023-01-12) entire document | 1-56 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **18 December 2023** | **20 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/088789**

| Patent document cited in search report | | | Publication date (day/month/year) | Patent family member(s) | | | Publication date (day/month/year) |
|---|---|---|---|---|---|---|---|
| CN | 109765547 | A | 17 May 2019 | None | | | |
| CN | 106664518 | A | 10 May 2017 | EP | 3198894 | A1 | 02 August 2017 |
| | | | | EP | 3198894 | B1 | 22 April 2020 |
| | | | | KR | 20170036736 | A | 03 April 2017 |
| | | | | KR | 102256532 | B1 | 26 May 2021 |
| | | | | US | 2016095092 | A1 | 31 March 2016 |
| | | | | WO | 2016048510 | A1 | 31 March 2016 |
| WO | 2023281079 | A1 | 12 January 2023 | None | | | |

Form PCT/ISA/210 (patent family annex) (July 2022)